# EUROPEAN PATENT SPECIFICATION

(11) **EP 4 575 872 B1**
(45) Date of publication and mention of the grant of the patent: **02.09.2026**
(21) Application number: 24212328.9
(22) Date of filing: 12.11.2024
(51) Int. Cl.: G06F 21/79, G06F 21/78

(54) **APPARATUS AND METHOD FOR PER-USER SECURE ACCESS CONTROL WITH FINE GRANULARITY**
VORRICHTUNG UND VERFAHREN ZUR SICHEREN ZUGANGSSTEUERUNG PRO BENUTZER MIT FEINER GRANULARITÄT
APPAREIL ET PROCÉDÉ DE CONTRÔLE D'ACCÈS SÉCURISÉ PAR UTILISATEUR À GRANULARITÉ FINE

(30) Priority: 19.12.2023 US 202318545945
(43) Date of publication of application: 25.06.2025
(73) Proprietor: Intel Corporation, Santa Clara, CA 95054 (US)
(72) Inventor: KALSI, Gurpreet, Portland, 97229 (US); FRYMAN, Joshua, Corvallis, 97330 (US); CAVE, Vincent, Hillsboro, 97124 (US); GANEV, Ivan, Portland, 97229 (US); PAWLOWSKI, Robert, Beaverton, 97007 (US)
(74) Representative: Goddar, Heinz J.

(56) References cited:
- US-A1- 2012 198 192
- US-A1- 2017 185 344
- US-A1- 2022 278 836
- US-A1- 2023 333 994

## Description

### Field of the Invention

This invention relates generally to the field of computer processors. More particularly, the invention relates to an apparatus and method for per-user secure access control with fine granularity.

### Description of the Related Art

Large scale datasets - up to multi-petabytes in size - must often remain resident in memory both for high-availability and practicality purposes. Such datasets must be made available to a multitude of potentially concurrent users, while ensuring that the users or group of users are only be allowed to access or modify a specific subset of the whole dataset to enforce clearance aspects or privacy concerns.

Currently, per user access is controlled through software abstractions that define a formalism to represent data and APIs to access and manipulate that data. The software is then responsible for enforcing permissions to access data. Although these approaches work, they are inherently vulnerable to software bugs and security exploits abusing the permission checks mechanisms.

US 2023/0333994 A1 relates to memory protection with hidden inline metadata. An embodiment of an apparatus includes processor cores; a computer memory for the storage of data; and cache memory communicatively coupled with one or more of the processor cores, wherein one or more processor cores of the plurality of processor cores are to implant hidden inline metadata in one or more cachelines for the cache memory, the hidden inline metadata being hidden at a linear address level.

### SUMMARY

The present invention is defined by the independent claims. Advantageous embodiments are described by the dependent claims.

### BRIEF DESCRIPTION OF THE DRAWINGS

A better understanding of the present invention can be obtained from the following detailed description in conjunction with the following drawings, in which:
A better understanding of the present invention can be obtained from the following detailed description in conjunction with the following drawings, in which:
**FIG. 1** illustrates an example computer system architecture;
**FIG. 2** illustrates a processor comprising a plurality of cores;
**FIG. 3A** illustrates a plurality of stages of a processing pipeline;
**FIG. 3B** illustrates details of one embodiment of a core;
**FIG. 4** illustrates execution circuitry in accordance with one embodiment;
**FIG. 5** illustrates one embodiment of a register architecture;
**FIG. 6** illustrates one example of an instruction format;
**FIG. 7** illustrates addressing techniques in accordance with one embodiment;
**FIG. 8** illustrates one embodiment of an instruction prefix;
FIGS. 9A**-D** illustrate embodiments of how the R, X, and B fields of the prefix are used;
FIGS. 10A**-B** illustrate examples of a second instruction prefix;
**FIG. 11** illustrates payload bytes of one embodiment of an instruction prefix;
**FIG. 12** illustrates instruction conversion and binary translation implementations;
**FIGS. 13-14** are schematic diagrams for a virtual extension to Global Address Space (VEGAS) system, in accordance with one or more example embodiments of the present disclosure;
**FIG. 15** illustrates a flow diagram of a process for an illustrative VEGAS system, in accordance with one or more example embodiments of the present disclosure;
**FIG. 16** illustrates an example of a computing device or computing system upon which any of one or more techniques (e.g., methods) may be performed, in accordance with one or more example embodiments of the present disclosure;
**FIG. 17** illustrates per-user authentication circuitry in accordance with some embodiments of the disclosure;
**FIG. 18** illustrates a security index data structure in accordance with some embodiments;
**FIG. 19** illustrates example values of a relative amount of memory used by embodiments of the invention;
**FIG. 20** illustrates authentication circuitry to provide access to internal and external memory access requests via an on-chip or off-chip network; and
**FIG. 21** illustrates a method in accordance with some embodiments of the invention.

### DETAILED DESCRIPTION

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

### Exemplary Computer Architectures

Detailed below are descriptions of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

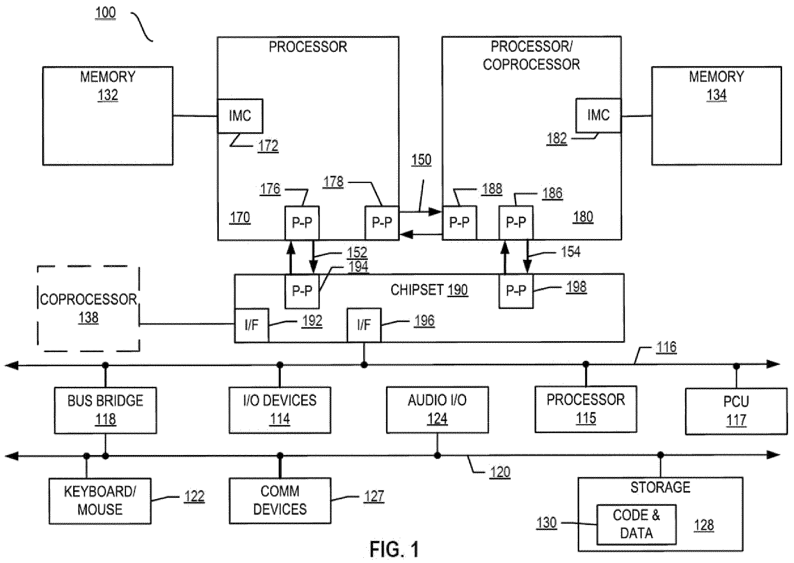

**FIG. 1** illustrates embodiments of an exemplary system. Multiprocessor system 100 is a point-to-point interconnect system and includes a plurality of processors including a first processor 170 and a second processor 180 coupled via a point-to-point interconnect 150. In some embodiments, the first processor 170 and the second processor 180 are homogeneous. In some embodiments, first processor 170 and the second processor 180 are heterogenous.

Processors 170 and 180 are shown including integrated memory controller (IMC) units circuitry 172 and 182, respectively. Processor 170 also includes as part of its interconnect controller units point-to-point (P-P) interfaces 176 and 178; similarly, second processor 180 includes P-P interfaces 186 and 188. Processors 170, 180 may exchange information via the point-to-point (P-P) interconnect 150 using P-P interface circuits 178, 188. IMCs 172 and 182 couple the processors 170, 180 to respective memories, namely a memory 132 and a memory 134, which may be portions of main memory locally attached to the respective processors.

Processors 170, 180 may each exchange information with a chipset 190 via individual P-P interconnects 152, 154 using point to point interface circuits 176, 194, 186, 198. Chipset 190 may optionally exchange information with a coprocessor 138 via a high-performance interface 192. In some embodiments, the coprocessor 138 is a special-purpose processor, such as, for example, a high-throughput MIC processor, a network or communication processor, compression engine, graphics processor, GPGPU, embedded processor, or the like.

A shared cache (not shown) may be included in either processor 170, 180 or outside of both processors, yet connected with the processors via P-P interconnect, such that either or both processors' local cache information may be stored in the shared cache if a processor is placed into a low power mode.

Chipset 190 may be coupled to a first interconnect 116 via an interface 196. In some embodiments, first interconnect 116 may be a Peripheral Component Interconnect (PCI) interconnect, or an interconnect such as a PCI Express interconnect or another I/O interconnect. In some embodiments, one of the interconnects couples to a power control unit (PCU) 117, which may include circuitry, software, and/or firmware to perform power management operations with regard to the processors 170, 180 and/or co-processor 138. PCU 117 provides control information to a voltage regulator to cause the voltage regulator to generate the appropriate regulated voltage. PCU 117 also provides control information to control the operating voltage generated. In various embodiments, PCU 117 may include a variety of power management logic units (circuitry) to perform hardwarebased power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 117 is illustrated as being present as logic separate from the processor 170 and/or processor 180. In other cases, PCU 117 may execute on a given one or more of cores (not shown) of processor 170 or 180. In some cases, PCU 117 may be implemented as a microcontroller (dedicated or general-purpose) or other control logic configured to execute its own dedicated power management code, sometimes referred to as P-code. In yet other embodiments, power management operations to be performed by PCU 117 may be implemented externally to a processor, such as by way of a separate power management integrated circuit (PMIC) or another component external to the processor. In yet other embodiments, power management operations to be performed by PCU 117 may be implemented within BIOS or other system software.

Various I/O devices 114 may be coupled to first interconnect 116, along with an interconnect (bus) bridge 118 which couples first interconnect 116 to a second interconnect 120. In some embodiments, one or more additional processor(s) 115, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 116. In some embodiments, second interconnect 120 may be a low pin count (LPC) interconnect. Various devices may be coupled to second interconnect 120 including, for example, a keyboard and/or mouse 122, communication devices 127 and a storage unit circuitry 128. Storage unit circuitry 128 may be a disk drive or other mass storage device which may include instructions/code and data 130, in some embodiments. Further, an audio I/O 124 may be coupled to second interconnect 120. Note that other architectures than the point-to-point architecture described above are possible. For example, instead of the point-to-point architecture, a system such as multiprocessor system 100 may implement a multi-drop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

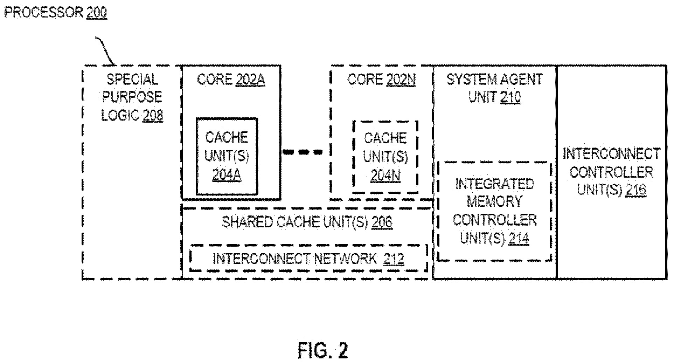

**FIG. 2** illustrates a block diagram of embodiments of a processor 200 that may have more than one core, may have an integrated memory controller, and may have integrated graphics. The solid lined boxes illustrate a processor 200 with a single core 202A, a system agent 210, a set of one or more interconnect controller units circuitry 216, while the optional addition of the dashed lined boxes illustrates an alternative processor 200 with multiple cores 202(A)-(N), a set of one or more integrated memory controller unit(s) circuitry 214 in the system agent unit circuitry 210, and special purpose logic 208, as well as a set of one or more interconnect controller units circuitry 216. Note that the processor 200 may be one of the processors 170 or 180, or co-processor 138 or 115 of **FIG. 1****.**

Thus, different implementations of the processor 200 may include: 1) a CPU with the special purpose logic 208 being integrated graphics and/or scientific (throughput) logic (which may include one or more cores, not shown), and the cores 202(A)-(N) being one or more general purpose cores (e.g., general purpose in-order cores, general purpose out-of-order cores, or a combination of the two); 2) a coprocessor with the cores 202(A)-(N) being a large number of special purpose cores intended primarily for graphics and/or scientific (throughput); and 3) a coprocessor with the cores 202(A)-(N) being a large number of general purpose in-order cores. Thus, the processor 200 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 200 may be a part of and/or may be implemented on one or more substrates using any of a number of process technologies, such as, for example, BiCMOS, CMOS, or NMOS.

A memory hierarchy includes one or more levels of cache unit(s) circuitry 204(A)-(N) within the cores 202(A)-(N), a set of one or more shared cache units circuitry 206, and external memory (not shown) coupled to the set of integrated memory controller units circuitry 214. The set of one or more shared cache units circuitry 206 may include one or more midlevel caches, such as level 2 (L2), level 3 (L3), level 4 (L4), or other levels of cache, such as a last level cache (LLC), and/or combinations thereof. While in some embodiments ring-based interconnect network circuitry 212 interconnects the special purpose logic 208 (e.g., integrated graphics logic), the set of shared cache units circuitry 206, and the system agent unit circuitry 210, alternative embodiments use any number of well-known techniques for interconnecting such units. In some embodiments, coherency is maintained between one or more of the shared cache units circuitry 206 and cores 202(A)-(N).

In some embodiments, one or more of the cores 202(A)-(N) are capable of multi-threading. The system agent unit circuitry 210 includes those components coordinating and operating cores 202(A)-(N). The system agent unit circuitry 210 may include, for example, power control unit (PCU) circuitry and/or display unit circuitry (not shown). The PCU may be or may include logic and components needed for regulating the power state of the cores 202(A)-(N) and/or the special purpose logic 208 (e.g., integrated graphics logic). The display unit circuitry is for driving one or more externally connected displays.

The cores 202(A)-(N) may be homogenous or heterogeneous in terms of architecture instruction set; that is, two or more of the cores 202(A)-(N) may be capable of executing the same instruction set, while other cores may be capable of executing only a subset of that instruction set or a different instruction set.

### Exemplary Core Architectures

### In-order and out-of-order core block diagram

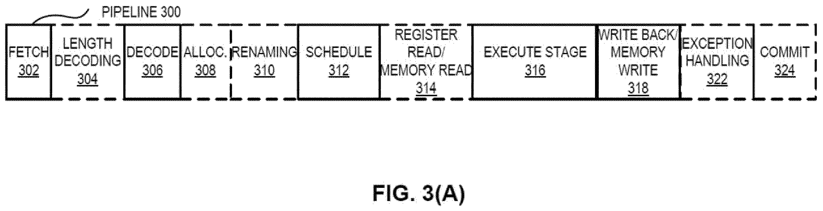

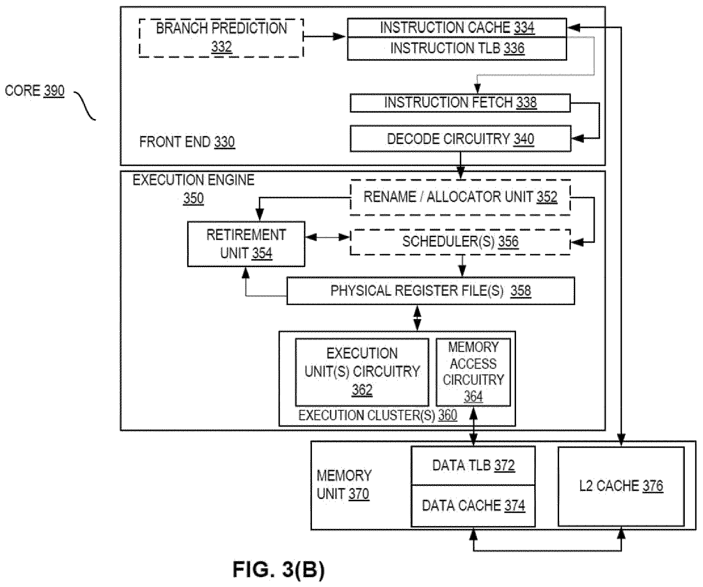

**FIG. 3(A)** is a block diagram illustrating both an exemplary in-order pipeline and an exemplary register renaming, out-of-order issue/execution pipeline according to embodiments of the invention. **FIG. 3(B)** is a block diagram illustrating both an exemplary embodiment of an in-order architecture core and an exemplary register renaming, out-of-order issue/execution architecture core to be included in a processor according to embodiments of the invention. The solid lined boxes in **FIGS. 3(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 3(A)****,** a processor pipeline 300 includes a fetch stage 302, an optional length decode stage 304, a decode stage 306, an optional allocation stage 308, an optional renaming stage 310, a scheduling (also known as a dispatch or issue) stage 312, an optional register read/memory read stage 314, an execute stage 316, a write back/memory write stage 318, an optional exception handling stage 322, and an optional commit stage 324. One or more operations can be performed in each of these processor pipeline stages. For example, during the fetch stage 302, one or more instructions are fetched from instruction memory, during the decode stage 306, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 306 and the register read/memory read stage 314 may be combined into one pipeline stage. In one embodiment, during the execute stage 316, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 300 as follows: 1) the instruction fetch 338 performs the fetch and length decoding stages 302 and 304; 2) the decode unit circuitry 340 performs the decode stage 306; 3) the rename/allocator unit circuitry 352 performs the allocation stage 308 and renaming stage 310; 4) the scheduler unit(s) circuitry 356 performs the schedule stage 312; 5) the physical register file(s) unit(s) circuitry 358 and the memory unit circuitry 370 perform the register read/memory read stage 314; the execution cluster 360 perform the execute stage 316; 6) the memory unit circuitry 370 and the physical register file(s) unit(s) circuitry 358 perform the write back/memory write stage 318; 7) various units (unit circuitry) may be involved in the exception handling stage 322; and 8) the retirement unit circuitry 354 and the physical register file(s) unit(s) circuitry 358 perform the commit stage 324.

**FIG. 3(B)** shows processor core 390 including front-end unit circuitry 330 coupled to an execution engine unit circuitry 350, and both are coupled to a memory unit circuitry 370. The core 390 may be a reduced instruction set computing (RISC) core, a complex instruction set computing (CISC) core, a very long instruction word (VLIW) core, or a hybrid or alternative core type. As yet another option, the core 390 may be a special-purpose core, such as, for example, a network or communication core, compression engine, coprocessor core, general purpose computing graphics processing unit (GPGPU) core, graphics core, or the like.

The front end unit circuitry 330 may include branch prediction unit circuitry 332 coupled to an instruction cache unit circuitry 334, which is coupled to an instruction translation lookaside buffer (TLB) 336, which is coupled to instruction fetch unit circuitry 338, which is coupled to decode unit circuitry 340. In one embodiment, the instruction cache unit circuitry 334 is included in the memory unit circuitry 370 rather than the front-end unit circuitry 330. The decode unit circuitry 340 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 340 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 390 includes a microcode ROM (not shown) or other medium that stores microcode for certain macroinstructions (e.g., in decode unit circuitry 340 or otherwise within the front end unit circuitry 330). In one embodiment, the decode unit circuitry 340 includes a micro-operation (micro-op) or operation cache (not shown) to hold/cache decoded operations, micro-tags, or micro-operations generated during the decode or other stages of the processor pipeline 300. The decode unit circuitry 340 may be coupled to rename/allocator unit circuitry 352 in the execution engine unit circuitry 350.

The execution engine circuitry 350 includes the rename/allocator unit circuitry 352 coupled to a retirement unit circuitry 354 and a set of one or more scheduler(s) circuitry 356. The scheduler(s) circuitry 356 represents any number of different schedulers, including reservations stations, central instruction window, etc. In some embodiments, the scheduler(s) circuitry 356 can include arithmetic logic unit (ALU) scheduler/scheduling circuitry, ALU queues, arithmetic generation unit (AGU) scheduler/scheduling circuitry, AGU queues, etc. The scheduler(s) circuitry 356 is coupled to the physical register file(s) circuitry 358. Each of the physical register file(s) circuitry 358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 358 includes vector registers unit circuitry, writemask registers unit circuitry, and scalar register unit circuitry. These register units may provide architectural vector registers, vector mask registers, general-purpose registers, etc. The physical register file(s) unit(s) circuitry 358 is overlapped by the retirement unit circuitry 354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 354 and the physical register file(s) circuitry 358 are coupled to the execution cluster(s) 360. The execution cluster(s) 360 includes a set of one or more execution units circuitry 362 and a set of one or more memory access circuitry 364. The execution units circuitry 362 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 356, physical register file(s) unit(s) circuitry 358, and execution cluster(s) 360 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 364). It should also be understood that where separate pipelines are used, one or more of these pipelines may be out-of-order issue/execution and the rest in-order.

In some embodiments, the execution engine unit circuitry 350 may perform load store unit (LSU) address/data pipelining to an Advanced Microcontroller Bus (AHB) interface (not shown), and address phase and writeback, data phase load, store, and branches.

The set of memory access circuitry 364 is coupled to the memory unit circuitry 370, which includes data TLB unit circuitry 372 coupled to a data cache circuitry 374 coupled to a level 2 (L2) cache circuitry 376. In one exemplary embodiment, the memory access units circuitry 364 may include a load unit circuitry, a store address unit circuit, and a store data unit circuitry, each of which is coupled to the data TLB circuitry 372 in the memory unit circuitry 370. The instruction cache circuitry 334 is further coupled to a level 2 (L2) cache unit circuitry 376 in the memory unit circuitry 370. In one embodiment, the instruction cache 334 and the data cache 374 are combined into a single instruction and data cache (not shown) in L2 cache unit circuitry 376, a level 3 (L3) cache unit circuitry (not shown), and/or main memory. The L2 cache unit circuitry 376 is coupled to one or more other levels of cache and eventually to a main memory.

The core 390 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 390 includes logic to support a packed data instruction set extension (e.g., AVX1, AVX2), thereby allowing the operations used by many multimedia applications to be performed using packed data.

### Exemplary Execution Unit(s) Circuitry

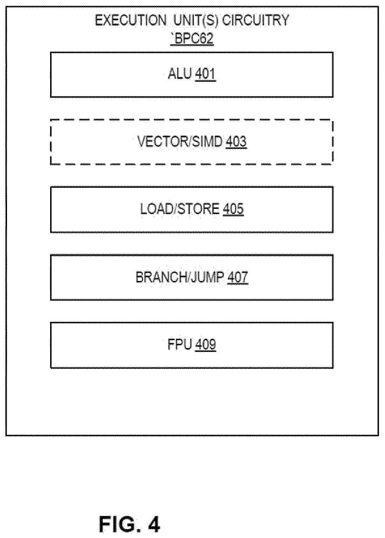

**FIG. 4** illustrates embodiments of execution unit(s) circuitry, such as execution unit(s) circuitry 362 of FIG. 3(B). As illustrated, execution unit(s) circuity 362 may include one or more ALU circuits 401, vector/SIMD unit circuits 403, load/store unit circuits 405, and/or branch/jump unit circuits 407. ALU circuits 401 perform integer arithmetic and/or Boolean operations. Vector/SIMD unit circuits 403 perform vector/SIMD operations on packed data (such as SIMD/vector registers). Load/store unit circuits 405 execute load and store instructions to load data from memory into registers or store from registers to memory. Load/store unit circuits 405 may also generate addresses. Branch/jump unit circuits 407 cause a branch or jump to a memory address depending on the instruction. Floating-point unit (FPU) circuits 409 perform floating-point arithmetic. The width of the execution unit(s) circuitry 362 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

### Exemplary Register Architecture

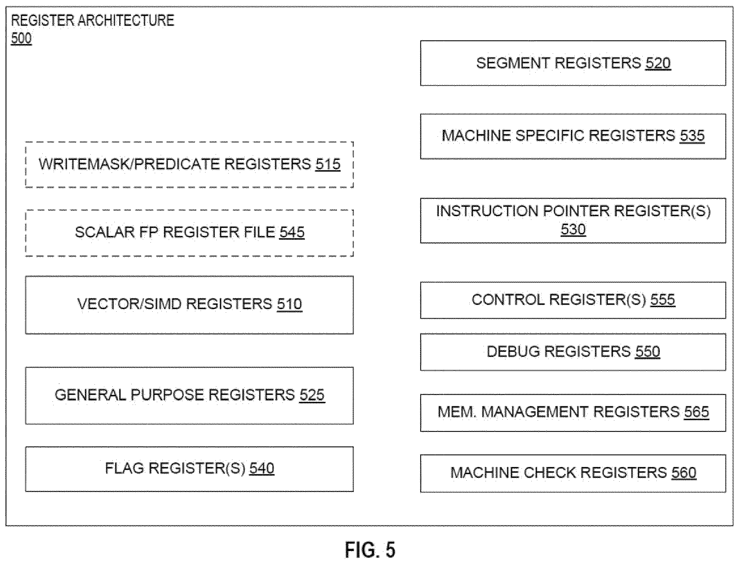

**FIG. 5** is a block diagram of a register architecture 500 according to some embodiments. As illustrated, there are vector/SIMD registers 510 that vary from 128-bit to 1,024 bits width. In some embodiments, the vector/SIMD registers 510 are physically 512-bits and, depending upon the mapping, only some of the lower bits are used. For example, in some embodiments, the vector/SIMD registers 510 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 500 includes writemask/predicate registers 515. For example, in some embodiments, there are 8 writemask/predicate registers (sometimes called k0 through k7) that are each 16-bit, 32-bit, 64-bit, or 128-bit in size. Writemask/predicate registers 515 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 515 corresponds to a data element position of the destination. In other embodiments, the writemask/predicate registers 515 are scalable and consists of a set number of enable bits for a given vector element (e.g., 8 enable bits per 64-bit vector element).

The register architecture 500 includes a plurality of general-purpose registers 525. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 500 includes scalar floating-point register 545 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 540 (e.g., EFLAGS, RFLAGS, etc.) store status and control information for arithmetic, compare, and system operations. For example, the one or more flag registers 540 may store condition code information such as carry, parity, auxiliary carry, zero, sign, and overflow. In some embodiments, the one or more flag registers 540 are called program status and control registers.

Segment registers 520 contain segment points for use in accessing memory. In some embodiments, these registers are referenced by the names CS, DS, SS, ES, FS, and GS.

Machine specific registers (MSRs) 535 control and report on processor performance. Most MSRs 535 handle system-related functions and are not accessible to an application program. Machine check registers 560 consist of control, status, and error reporting MSRs that are used to detect and report on hardware errors.

One or more instruction pointer register(s) 530 store an instruction pointer value. Control register(s) 555 (e.g., CR0-CR4) determine the operating mode of a processor (e.g., processor 170, 180, 138, 115, and/or 200) and the characteristics of a currently executing task. Debug registers 550 control and allow for the monitoring of a processor or core's debugging operations.

Memory management registers 565 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

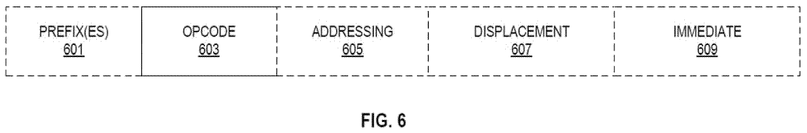

**FIG. 6** illustrates embodiments of an instruction format. As illustrated, an instruction may include multiple components including, but not limited to, one or more fields for: one or more prefixes 601, an opcode 603, addressing information 605 (e.g., register identifiers, memory addressing information, etc.), a displacement value 607, and/or an immediate 609. Note that some instructions utilize some or all of the fields of the format whereas others may only use the field for the opcode 603. In some embodiments, the order illustrated is the order in which these fields are to be encoded, however, it should be appreciated that in other embodiments these fields may be encoded in a different order, combined, etc.

The prefix(es) field(s) 601, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 603 is used to at least partially define the operation to be performed upon a decoding of the instruction. In some embodiments, a primary opcode encoded in the opcode field 603 is 1, 2, or 3 bytes in length. In other embodiments, a primary opcode can be a different length. An additional 3-bit opcode field is sometimes encoded in another field.

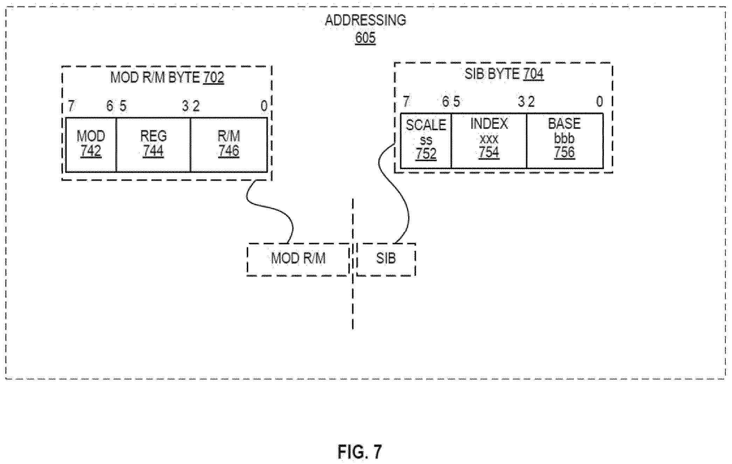

The addressing field 605 is used to address one or more operands of the instruction, such as a location in memory or one or more registers. FIG. 7 illustrates embodiments of the addressing field 605. In this illustration, an optional ModR/M byte 702 and an optional Scale, Index, Base (SIB) byte 704 are shown. The ModR/M byte 702 and the SIB byte 704 are used to encode up to two operands of an instruction, each of which is a direct register or effective memory address. Note that each of these fields are optional in that not all instructions include one or more of these fields. The MOD R/M byte 702 includes a MOD field 742, a register field 744, and R/M field 746.

The content of the MOD field 742 distinguishes between memory access and non-memory access modes. In some embodiments, when the MOD field 742 has a value of b11, a register-direct addressing mode is utilized, and otherwise register-indirect addressing is used.

The register field 744 may encode either the destination register operand or a source register operand, or may encode an opcode extension and not be used to encode any instruction operand. The content of register index field 744, directly or through address generation, specifies the locations of a source or destination operand (either in a register or in memory). In some embodiments, the register field 744 is supplemented with an additional bit from a prefix (e.g., prefix 601) to allow for greater addressing.

The R/M field 746 may be used to encode an instruction operand that references a memory address, or may be used to encode either the destination register operand or a source register operand. Note the R/M field 746 may be combined with the MOD field 742 to dictate an addressing mode in some embodiments.

The SIB byte 704 includes a scale field 752, an index field 754, and a base field 756 to be used in the generation of an address. The scale field 752 indicates scaling factor. The index field 754 specifies an index register to use. In some embodiments, the index field 754 is supplemented with an additional bit from a prefix (e.g., prefix 601) to allow for greater addressing. The base field 756 specifies a base register to use. In some embodiments, the base field 756 is supplemented with an additional bit from a prefix (e.g., prefix 601) to allow for greater addressing. In practice, the content of the scale field 752 allows for the scaling of the content of the index field 754 for memory address generation (e.g., for address generation that uses 2^{scale} * index + base).

Some addressing forms utilize a displacement value to generate a memory address. For example, a memory address may be generated according to 2^{scale} * index + base + displacement, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 607 provides this value. Additionally, in some embodiments, a displacement factor usage is encoded in the MOD field of the addressing field 605 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 607.

In some embodiments, an immediate field 609 specifies an immediate for the instruction. An immediate may be encoded as a 1-byte value, a 2-byte value, a 4-byte value, etc.

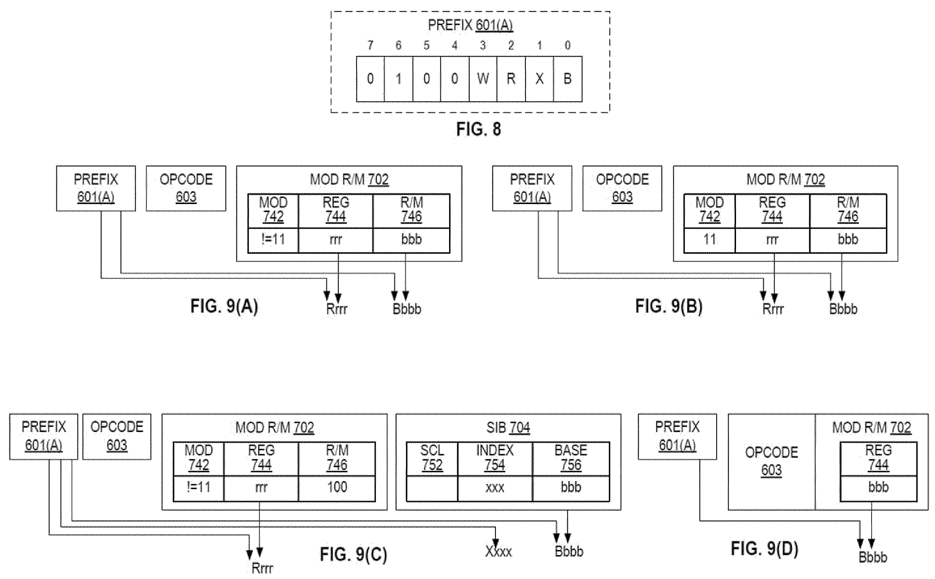

**FIG. 8** illustrates embodiments of a first prefix 601(A). In some embodiments, the first prefix 601(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 601(A) may specify up to three registers using 3-bit fields depending on the format: 1) using the reg field 744 and the R/M field 746 of the Mod R/M byte 702; 2) using the Mod R/M byte 702 with the SIB byte 704 including using the reg field 744 and the base field 756 and index field 754; or 3) using the register field of an opcode.

In the first prefix 601(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 744 and MOD R/M R/M field 746 alone can each only address 8 registers.

In the first prefix 601(A), bit position 2 (R) may an extension of the MOD R/M reg field 744 and may be used to modify the ModR/M reg field 744 when that field encodes a general purpose register, a 64-bit packed data register (e.g., a SSE register), or a control or debug register. R is ignored when Mod R/M byte 702 specifies other registers or defines an extended opcode.

Bit position 1 (X) X bit may modify the SIB byte index field 754.

Bit position B (B) B may modify the base in the Mod R/M R/M field 746 or the SIB byte base field 756; or it may modify the opcode register field used for accessing general purpose registers (e.g., general purpose registers 525).

**FIGS. 9(A)****-(D)** illustrate embodiments of how the R, X, and B fields of the first prefix 601(A) are used. **FIG. 9(A)** illustrates R and B from the first prefix 601(A) being used to extend the reg field 744 and R/M field 746 of the MOD R/M byte 702 when the SIB byte 7 04 is not used for memory addressing. **FIG. 9(B)** illustrates R and B from the first prefix 601(A) being used to extend the reg field 744 and R/M field 746 of the MOD R/M byte 702 when the SIB byte 7 04 is not used (register-register addressing). **FIG. 9(C)** illustrates R, X, and B from the first prefix 601(A) being used to extend the reg field 744 of the MOD R/M byte 702 and the index field 754 and base field 756 when the SIB byte 7 04 being used for memory addressing. **FIG. 9(D)** illustrates B from the first prefix 601(A) being used to extend the reg field 744 of the MOD R/M byte 702 when a register is encoded in the opcode 603.

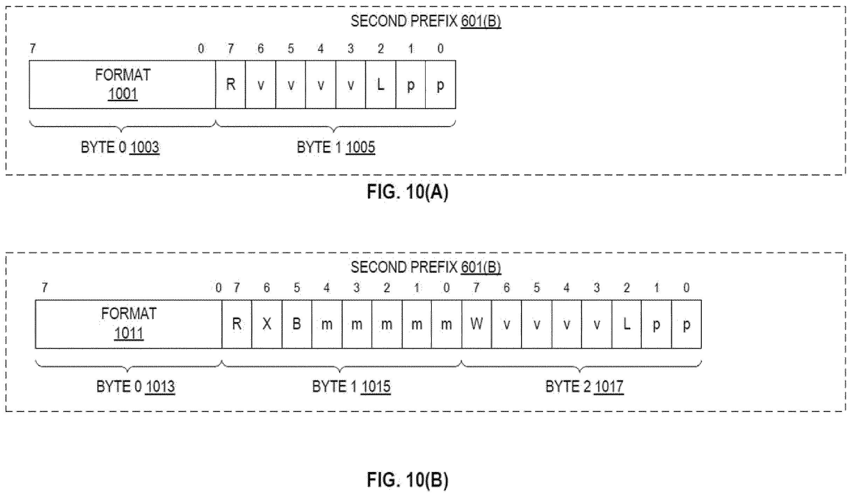

**FIGS. 10(A)****-(B)** illustrate embodiments of a second prefix 601(B). In some embodiments, the second prefix 601(B) is an embodiment of a VEX prefix. The second prefix 601(B) encoding allows instructions to have more than two operands, and allows SIMD vector registers (e.g., vector/SIMD registers 510) to be longer than 64-bits (e.g., 128-bit and 256-bit). The use of the second prefix 601(B) provides for three-operand (or more) syntax. For example, previous two-operand instructions performed operations such as A = A + B, which overwrites a source operand. The use of the second prefix 601(B) enables operands to perform nondestructive operations such as A = B + C.

In some embodiments, the second prefix 601(B) comes in two forms - a two-byte form and a three-byte form. The two-byte second prefix 601(B) is used mainly for 128-bit, scalar, and some 256-bit instructions; while the three-byte second prefix 601(B) provides a compact replacement of the first prefix 601(A) and 3-byte opcode instructions.

**FIG. 10(A)** illustrates embodiments of a two-byte form of the second prefix 601(B). In one example, a format field 1001 (byte 0 1003) contains the value C5H. In one example, byte 1 1005 includes a "R" value in bit[7]. This value is the complement of the same value of the first prefix 601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746 and the Mod R/M reg field 744 encode three of the four operands. Bits[7:4] of the immediate 609 are then used to encode the third source register operand.

**FIG. 10(B)** illustrates embodiments of a three-byte form of the second prefix 601(B). in one example, a format field 1011 (byte 0 1013) contains the value C4H. Byte 1 1015 includes in bits[7:5] "R," "X," and "B" which are the complements of the same values of the first prefix 601(A). Bits[4:0] of byte 1 1015 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 1017 is used similar to W of the first prefix 601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746, and the Mod R/M reg field 744 encode three of the four operands. Bits[7:4] of the immediate 609 are then used to encode the third source register operand.

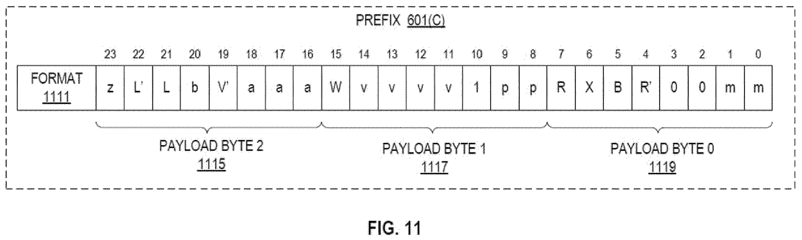

**FIG. 11** illustrates embodiments of a third prefix 601(C). In some embodiments, the first prefix 601(A) is an embodiment of an EVEX prefix. The third prefix 601(C) is a four-byte prefix.

The third prefix 601(C) can encode 32 vector registers (e.g., 128-bit, 256-bit, and 512-bit registers) in 64-bit mode. In some embodiments, instructions that utilize a writemask/opmask (see discussion of registers in a previous figure, such as **FIG. 5**) or predication utilize this prefix. Opmask register allow for conditional processing or selection control. Opmask instructions, whose source/destination operands are opmask registers and treat the content of an opmask register as a single value, are encoded using the second prefix 601(B).

The third prefix 601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 601(C) is a format field 1111 that has a value, in one example, of 62H. Subsequent bytes are referred to as payload bytes 1115-1119 and collectively form a 24-bit value of P[23:0] providing specific capability in the form of one or more fields (detailed herein).

In some embodiments, P[1:0] of payload byte 1119 are identical to the low two mmmmm bits. P[3:2] are reserved in some embodiments. Bit P[4] (R') allows access to the high 16 vector register set when combined with P[7] and the ModR/M reg field 744. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 744 and ModR/M R/M field 746. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 601(A) and second prefix 611(B) and may serve as an opcode extension bit or operand size promotion.

P[18:16] specify the index of a register in the opmask (writemask) registers (e.g., writemask/predicate registers 515). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 601(C) are detailed in the following tables.

**Table 1: 32-Register Support in 64-bit Mode**

| | **4** | **3** | **[2:0]** | **REG. TYPE** | **COMMON USAGES** |
|---|---|---|---|---|---|
| **REG** | R' | R | ModR/M reg | GPR, Vector | Destination or Source |
| **VVVV** | V' | VVVV | | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB.index | GPR | Memory addressing |
| **VIDX** | V' | X | SIB.index | Vector | VSIB memory addressing |

**Table 2: Encoding Register Specifiers in 32-bit Mode**

| | **[2:0]** | **REG. TYPE** | **COMMON USAGES** |
|---|---|---|---|
| **REG** | ModR/M reg | GPR, Vector | Destination or Source |
| **VVVV** | VVVV | GPR, Vector | 2^{nd} Source or Destination |
| **RM** | ModR/M R/M | GPR, Vector | 1^{st} Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

**Table 3: Opmask Register Specifier Encoding**

| | **[2:0]** | **REG. TYPE** | **COMMON USAGES** |
|---|---|---|---|
| **REG** | ModR/M Reg | k0-k7 | Source |
| **VVVV** | VVVV | k0-k7 | 2^{nd} Source |
| **RM** | ModR/M R/M | k0-7 | 1^{st} Source |
| **{k1]** | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

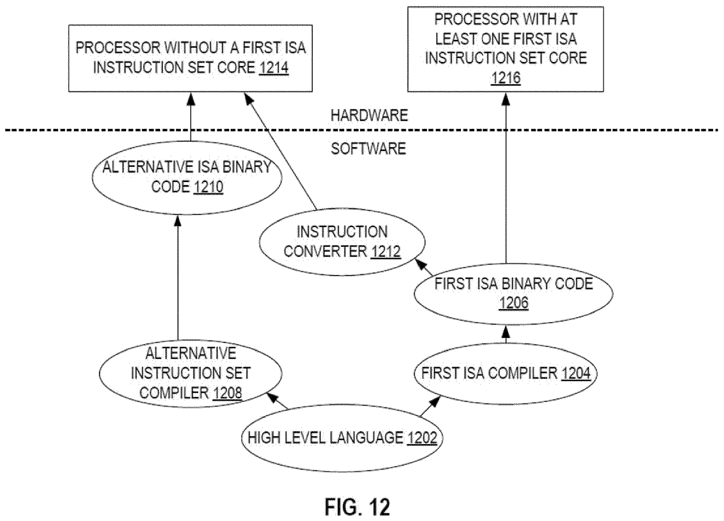

**FIG. 12** illustrates a block diagram contrasting the use of a software instruction converter to convert binary instructions in a source instruction set to binary instructions in a target instruction set according to certain implementations. In the illustrated embodiment, the instruction converter is a software instruction converter, although alternatively the instruction converter may be implemented in software, firmware, hardware, or various combinations thereof. **FIG. 12** shows a program in a high level language 1202 may be compiled using a first ISA compiler 1204 to generate first ISA binary code 1206 that may be natively executed by a processor with at least one first instruction set core 1216. The processor with at least one first ISA instruction set core 1216 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 1204 represents a compiler that is operable to generate first ISA a binary code 1206 (e.g., object code) that can, with or without additional linkage processing, be executed on the processor with at least one first ISA instruction set core 1216.

Similarly, **FIG. 12** shows the program in the high level language 1202 may be compiled using an alternative instruction set compiler 1208 to generate alternative instruction set binary code 1210 that may be natively executed by a processor without a first ISA instruction set core 1214. The instruction converter 1212 is used to convert the first ISA binary code 1206 into code that may be natively executed by the processor without a first ISA instruction set core 1214. This converted code is not likely to be the same as the alternative instruction set binary code 1210 because an instruction converter capable of this is difficult to make; however, the converted code will accomplish the general operation and be made up of instructions from the alternative instruction set. Thus, the instruction converter 1212 represents software, firmware, hardware, or a combination thereof that, through emulation, simulation or any other process, allows a processor or other electronic device that does not have a first ISA instruction set processor or core to execute the first ISA binary code 1206.

### VIRTUAL EXTENSION TO GLOBAL ADDRESS SPACE AND SYSTEM SECURITY

The need for Global Address Space on large scale multi-core systems is addressed using system and software libraries. Application user awareness of system memory space provides hooks to exploit it and breach security solutions.

Global Address Space (GAS) is a memory architecture used in parallel and distributed computing systems where all the memory locations across multiple processing nodes can be directly accessed by any processor in the system without the need for explicit message passing or data copying. In other words, the memory of each processing node is combined into a single, unified address space, allowing processors to read and write data from any location as if it were local memory.

This shared-memory model simplifies the programming of parallel and distributed systems by providing a more intuitive way to manage data access and communication between processing nodes. However, implementing a GAS architecture comes with challenges, such as ensuring data consistency, managing memory latency, and maintaining security, as all processors can potentially access any memory location in the system.

Security in a GAS architecture is typically handled by software which partitions the address map among the various user jobs, system, and kernel spaces. Hardware approaches are limited and exist more as support methods for implementing software security. One example is by designing regions in the address specifically for users, kernel, and system to guide software usage. In addition, some previous hardware solutions include minor protection checks but do not provide extensive protection to isolate memory regions among different user jobs.

Software security solutions incur a significant amount of overhead for the programmer and will affect the total performance of an application. Additionally, software-only security leaves the hardware exposed to various physical inspection methods. Limited hardware guidance leaves significant security holes, as it alone does not protect user code and data regions from other users (or kernel/system software).

Some embodiments of the invention relate to systems, methods, and devices for a virtual extension to global address space (VEGAS) and system security. In one or more embodiments, a VEGAS system may provide a mechanism to perform isolated job execution without interfering with standard software tools and models. The VEGAS system provides a memory region to a "job" within a global address space which is only visible/accessible to that job. Compute blocks associated with the job can access unencrypted data within an assigned memory region whereas it remains encrypted to all other resources in the system. While part of the global address space is visible to the compute logic, security aspects are managed outside using VEGAS logic. Resources associated with a job have no visibility to the physically mapped memory which prevents side channel attacks. The VEGAS system approach provides a scalable security solution for systems implementing a global address space (GAS). Previous hardware solutions implementing memory region protections within the address map, or a basic supervisor mode provide only limited security and can be easily bypassed. The VEGAS system provides an end-to-end system solution that fully protects memory ranges for the duration of a job's existence.

The VEGAS system is a versatile computing architecture that can be applied to a wide range of applications, from small form factor devices to supercomputing systems. This disclosure focuses on a single-node office server setup, which includes compute resources, memory (DRAM), and non-volatile memory (NVM) connected via industry-standard interfaces such as NVMe. However, this may apply to other server and computing arrangements.

Some of the components of the VEGAS system may include:
Compute resources: Represented as compute slices, these computing cores can be based on various architectures such as x86, ARM, or RISC-V.

Memory: This includes DRAM and NVM, which store and manage data within the system.

Network: Multiple network levels connect the resources and memories within the system, although the VEGAS architecture can also be applicable to just one level of the network.

Accelerators: Referred to as Memory Processing Units (MPUs), these specialized components provide specific acceleration for certain functions.

The VEGAS system allows users to access all resources, with security provisions typically implemented in software. However, the VEGAS system introduces dedicated hardware support for improved security and isolation. When a user runs a job on the VEGAS system, resources such as compute slices, memory regions, and external connectivity are allocated by a centralized scheduler. The VEGAS system ensures that data is visible only to the specific job and protected from unauthorized access, even if network transactions pass through other resources.

The VEGAS system provides compartmentalization and isolation for jobs running on the platform, ensuring data security and efficient resource allocation.

In one or more embodiments, a VEGAS system may provide process isolation from all other processes using metadata attached to the virtual address space, with address translation handled outside the compute block. It should be understood that compute block is a term used to describe any computing unit or structure within the VEGAS system. It may refer to a compute slice, a Compute Complex Tile (CCT), or any other computing element within the system.

In one or more embodiments, a VEGAS system may facilitate that compute blocks can access their own allocated virtual memory space without exposure to physical address mapping, preventing side channel attacks.

In one or more embodiments, a VEGAS system may facilitate that the VEGAS logic placed near-memory compute blocks performs data decryption and encryption for atomic compute operations and security checks for data handling.

In one or more embodiments, a VEGAS system may facilitate that the VEGAS block at the network boundary performs security checks, metadata decoding, address interleaving, metadata encryption and decryption, metadata compression and decompression, and resource access pattern detection.

In one or more embodiments, a VEGAS system may provide a scalable directory structure connected to the socket network for coherency in the memory region of interest, with VEGAS logic within the directory structure to prevent unrelated jobs from accessing cache information.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

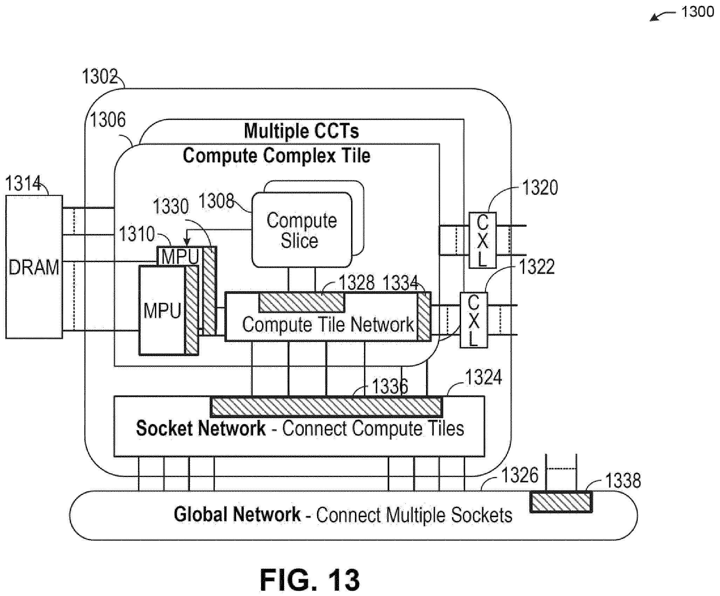

FIG. 13 depicts an illustrative schematic diagram for a VEGAS system, in accordance with one or more example embodiments of the present disclosure.

Referring to FIG. 13, there is shown a conceptual view of a system with VEGAS components. A Compute Slice (1308) represents the programmable compute engines with the capability to boot the operating system and run processes. The Memory Processing Unit (MPU, 1312) consists of a memory controller, atomic compute support, and data manipulation operations. The Compute Complex Tile (CCT, 1306) is composed of multiple compute slices and MPUs connected over a local network. A socket (1302) comprises multiple CCTs (1306) connected using a socket network (1324) and these can communicate to other system components using CXL (1320 and/or 1322), PCIe, or similar interfaces. Multiple sockets can be connected using a Global network (1326) which also has processing units connected to them like Xeon or similar cores with security features. The VEGAS block (1330, 1334, 1336, and 1338) is responsible for performing: (a) Virtual address translation; (b) Job isolation by allowing jobs mapped to specific resources only; (c) Metadata field management (decryption, encryption, compression); (d) Data decryption and encryption; and (e) Access rule checks and security management.

A process initiated on a secure system connected to the proposed VEGAS system or launched from a compute tile within the VEGAS system will generate the secure task ID linked to that process. This task-ID is securely delivered to VEGAS blocks (1330, 1334, 1336, or 1338) through the encrypted channel to mark address space and rules associated with task-ID protection.

In the VEGAS system, process isolation may be achieved by attaching metadata to the virtual address space of each process. This metadata is invisible to the compute tile, ensuring that each process remains separate from others. For example, consider two processes, A and B, running on the system. The VEGAS system assigns unique metadata to each process, ensuring that they cannot inadvertently access each other's resources, thereby maintaining isolation and security.

Process isolation is an important aspect of the VEGAS system, as it ensures that different processes running on the system do not interfere with each other or access each other's resources. To achieve this, the VEGAS system employs metadata attached to the virtual address space of each process. For example, for every process running on the system, the VEGAS system associates metadata with its virtual address space. This metadata contains information about the process, such as its permissions, privileges, and access restrictions. By attaching metadata to the virtual address space, the VEGAS system can enforce isolation between processes and control access to resources.

The metadata associated with a process's virtual address space is not visible to the compute tile. Instead, the address translation, which maps virtual addresses to physical addresses, is handled outside the compute block by the VEGAS logic. This ensures that the compute block cannot access or manipulate the metadata, which could lead to potential security vulnerabilities.

The VEGAS system enforces process isolation by leveraging the metadata associated with each process's virtual address space. When a compute block requests access to a resource, the VEGAS logic checks the metadata to determine if the block is authorized to access the resource. If the compute block is not authorized, the VEGAS logic denies access, thereby preventing unauthorized interactions between processes. For example, assuming there are two processes, A and B, running on the VEGAS system. Each process has its own metadata associated with its virtual address space, dictating the resources it can access. When process A attempts to access a resource reserved for process B, the VEGAS logic checks the metadata and recognizes that process A is not authorized to access the resource. As a result, the VEGAS logic denies the access request, effectively isolating the processes and ensuring the integrity and security of the system.

By using metadata attached to the virtual address space, the VEGAS system can effectively isolate processes running on the system, protecting sensitive data and resources from unauthorized access and potential security threats.

In the VEGAS system, compute blocks can access their own allocated virtual memory space without being exposed to physical address mapping. This design choice prevents side channel attacks by minimizing the compute block's knowledge of physical memory. For instance, a compute block may be responsible for processing sensitive data. By ensuring that the block cannot access the physical memory mapping, the VEGAS system minimizes the risk of an attacker exploiting side-channel vulnerabilities to access this sensitive information.

Each compute block in the VEGAS system is assigned its own virtual memory space. This virtual memory space is separate from other compute blocks, ensuring that each block operates independently and securely within its own allocated memory.

The VEGAS logic is situated outside of the compute block's boundary and is responsible for translating virtual addresses to physical addresses. By keeping the VEGAS logic separate from the compute block, the system ensures that compute blocks do not have direct access to the physical address mapping. This separation minimizes the risk of security vulnerabilities that could arise if compute blocks were aware of the physical memory layout.

Before a compute block posts data on the system network, the VEGAS logic handles the address translation and virtual extension. This process ensures that the compute block only deals with virtual addresses, remaining unaware of the actual physical memory locations.

The lack of knowledge about physical memory in compute blocks helps prevent side channel attacks. In a side channel attack, an attacker could exploit the knowledge of physical memory layout to infer sensitive information about other processes running on the system. By ensuring that compute blocks only have access to their own virtual memory space, the VEGAS system effectively mitigates the risk of such attacks.

For example, assuming there are two compute blocks, X and Y, each assigned their own virtual memory space. When compute block X needs to access a resource, it uses a virtual address associated with its own memory space. The VEGAS logic translates this virtual address to the corresponding physical address, allowing compute block X to access the resource without ever being exposed to the physical memory layout. If an attacker tries to exploit compute block X's knowledge to gain information about compute block Y's memory, they will be unsuccessful because compute block X only has access to its own virtual memory space and is unaware of the physical memory layout.

By maintaining a separation between compute blocks and physical address mapping, the VEGAS system effectively secures the memory access process, significantly reducing the risk of side channel attacks and ensuring the overall security of the system.

In one or more embodiments, the VEGAS block/logic (e.g., 1330) is strategically placed adjacent to the MPU in near-memory compute blocks. Some of the functions of the VEGAS block may include:
a) Data decryption and encryption for atomic compute operations: Atomic compute operations are indivisible and uninterruptible tasks that must be executed in their entirety to ensure data consistency and accuracy. The VEGAS logic plays a crucial role in securing these operations by handling the decryption and encryption of data. When a compute block receives encrypted data, the VEGAS logic decrypts the data before the atomic compute operation is performed. Once the operation is complete, the VEGAS logic re-encrypts the data before it is sent back to the memory or shared with other compute blocks. This process ensures that sensitive data remains secure while being processed, as only authorized compute blocks can access and decrypt the data. For example, assuming a compute block is tasked with performing an atomic operation on encrypted financial data. The VEGAS logic decrypts the data so that the compute block can execute the operation. After the operation is complete, the VEGAS logic encrypts the data again, ensuring that the processed data remains secure.
b) Security checks to authenticate data handling: In addition to data encryption and decryption, VEGAS logic also performs security checks to verify the legitimacy of data handling operations. These checks help to ensure that only authorized and authenticated operations can access or manipulate data within the system.

By combining data decryption/encryption with security checks, the VEGAS logic adds a robust layer of security to near-memory compute blocks, safeguarding sensitive data and ensuring that only authorized operations can access and manipulate the data.

The VEGAS block, situated at the network boundary, serves as a security gatekeeper by performing multiple critical functions. Its primary purpose is to ensure that data and metadata transmitted over the network are secure, reliable, and compliant with the established rules. Some of the functions of the VEGAS block may include:
a) Security checks on network packets: The VEGAS block inspects incoming and outgoing network packets to verify their authenticity. Packets that fail authentication are discarded (thrashed) and an acknowledgment is sent back to the sender. This process helps to maintain the integrity of the system and prevents unauthorized access or data tampering.
b) Metadata decode and rule checks: The VEGAS block decodes metadata associated with network packets and checks whether the packets comply with predefined rules. This step ensures that only legitimate packets are allowed to pass through the system, minimizing the risk of malicious activities or data breaches.
c) Address interleaving as programmed by the process: The VEGAS block is responsible for address interleaving, which rearranges memory addresses in a specific pattern as programmed by the process. This function helps to optimize memory access, reduce latency, and improve overall system performance.
d) Metadata encryption and decryption for secure transmission over the network: The VEGAS block encrypts metadata before it is transmitted over the network, ensuring that sensitive information is protected from eavesdropping or interception. Similarly, when receiving metadata, the VEGAS block decrypts it so that the system can process and interpret the information.
e) Metadata compression and decompression: To reduce the amount of data transmitted over the network and improve efficiency, the VEGAS block compresses metadata before sending it. Upon receipt, the VEGAS block decompresses the metadata, enabling the system to interpret and utilize the information.
f) Detecting resource access patterns and blocking transactions if rules do not allow them: The VEGAS block monitors resource access patterns to identify and block any transactions that violate established rules. This functionality helps to prevent side-channel attacks that might occur by repeatedly accessing a system resource (hammering).

For example, assuming a compute block wants to send data to another compute block within the system. Before the data is transmitted, the VEGAS block checks the packet's security, decodes and verifies the metadata, and interleaves the addresses as programmed. It also encrypts and compresses the metadata to ensure secure and efficient transmission. On the receiving end, the VEGAS block decrypts and decompresses the metadata, verifies that the packet complies with the rules, and monitors resource access patterns to prevent potential side-channel attacks.

By performing these critical functions at the network boundary, the VEGAS block plays a pivotal role in maintaining the security and integrity of the system, ensuring that data and metadata are securely transmitted and processed according to established rules and protocols.

The VEGAS system employs a scalable directory structure connected to the socket network to perform coherency for the memory region of interest. This structure incorporates VEGAS logic to prevent unrelated jobs, identified using unique Job-IDs, from accessing cache information. For instance, if two jobs with different Job-IDs are running on the system, the VEGAS logic ensures that they cannot access each other's cache information, maintaining separation and security between unrelated jobs.

Memory coherency is important for maintaining data consistency across various memory locations when multiple compute blocks are accessing and modifying the data. The directory structure is responsible for tracking the memory regions of interest and ensuring that the most up-to-date data is available to the compute blocks.

The VEGAS logic integrated within the directory structure adds an extra layer of security to the system by preventing unrelated jobs from accessing cache information. Each job running on the system is assigned a unique Job-ID, which serves as an identifier for that specific job. The VEGAS logic uses these Job-IDs to differentiate between jobs and enforce access control rules.

By monitoring and controlling access to cache information, the VEGAS logic helps prevent unauthorized access and potential security breaches. This security measure is particularly important in shared computing environments where multiple users or applications may be running simultaneously, and sensitive data must be protected from unauthorized access. For example, assuming there are two jobs, Job-A and Job-B, that are running on the VEGAS system, each with its unique Job ID. Job-A is accessing and modifying data in memory region X, while Job-B is working on memory region Y. The scalable directory structure tracks the memory regions of interest for each job and ensures data consistency across the system. The VEGAS logic within the directory structure checks the Job ID associated with each request for cache information. If a request from Job-A attempts to access cache information related to memory region Y, the VEGAS logic denies the request, preventing unauthorized access and maintaining data security.

It is understood that the above descriptions are for purposes of illustration and are not meant to be limiting.

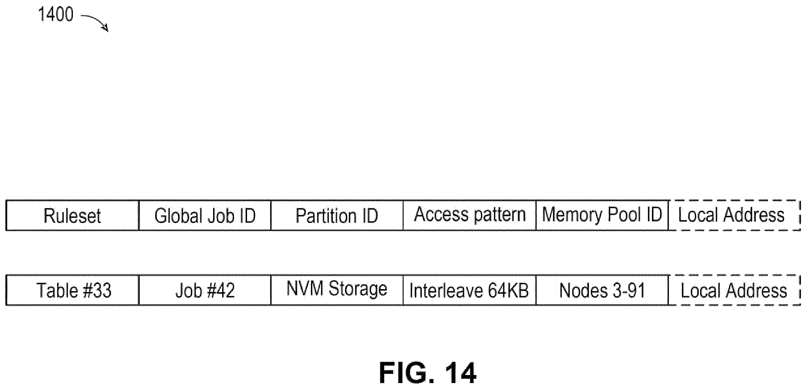

Referring to FIG. 14, there is shown an example use of VEGAS meta-data fields to isolate and secure data within one user job.

In one or more embodiments, the VEGAS system may utilize a global address space to manage memory resources, allowing different jobs to run on the system with their own unique physical address spaces. This ensures that jobs are isolated from one another and cannot access each other's memory. The global address space encompasses a wide range of memory, from zero to several petabytes or zettabytes, depending on the system's requirements. Within this global address space, multiple jobs can run concurrently, each with its own allocated memory regions.

For example, Job 1 may require a certain memory region, which can be mapped linearly within the global address space. Similarly, Job 2 might require a different amount of memory, which can also be allocated within the global address space but may not be linearly distributed.

To ensure isolation between jobs, the VEGAS system uses VEGAS blocks placed at different granularities, such as interfaces to compute resources, networks, and memory. These blocks authenticate and authorize transactions based on their associated memory spaces.

If Job 1 is running on a compute slice and makes a memory request within its allocated memory region, the VEGAS block will authorize the transaction, allowing it to pass through the network and access the required memory. However, if Job 1 makes a request outside of its allocated memory region, the VEGAS block will deny the transaction, ensuring that jobs cannot access each other's memory spaces.

In the context of the VEGAS system, the virtual address to system physical address translation occurs for what is referred to as the job physical address. Although the VEGAS system itself is not directly involved in the translation, it plays an important role in processing address spaces. The job is only aware of its own physical address space, and the VEGAS block is responsible for translating the job physical address to the system physical address. The two address spaces defined in the system are the physical address and the system physical address. Compute resources running jobs have no visibility of the system physical address space, making the system secure. Jobs only have access to their respective physical address, ensuring they remain unaware of the system's overall resources.

The VEGAS system ensures job isolation by mapping each job to specific resources. This means that if a compute slice can access a certain region of memory, the system will provide isolation, preventing two jobs from accessing each other's resources.

An important aspect of the VEGAS system is the transmission of metadata that carries necessary information for authentication. This metadata contains various attributes, such as access rules, security levels, job ID, partition ID, and access patterns, among others. The metadata is essential for encoding the transaction and ensuring secure data transfer.

Some of the VEGAS block's functions are to authenticate and send the transaction to its destination, such as DRAM. Authentication can occur either at the source or the destination. In either case, once the transaction is authenticated, the VEGAS block forms a packet with the necessary information, indicating which job the transaction belongs to, along with any applicable rules.

The data being transferred is encrypted, ensuring that no unencrypted information is transmitted over the network. Metadata encryption is also possible, involving the encryption of job IDs, partition IDs, and other relevant information. This encrypted metadata is then transferred over the network to the destination. The encryption process is necessary because, without knowledge of which specific job the data belongs to, the destination cannot fetch and decrypt the data. This is particularly important for accelerators sitting next to memory, which need to read the decrypted data, perform operations, and write the data back. Thus, the additional information provided by the metadata must be packaged and sent over the network.

For a system comprising multiple compute tiles and memory components which are connected using a scalable network, the VEGAS system provides a mechanism to perform isolated job execution without interfering with standard software tools and models. In essence, assuming a 256-bit true GAS implementation, each "job" in the machine would be exposed to a 64-bit address space for all data belonging to that job, no matter how it is attributed across the physical machine. The other address bits [255:65] would encode a larger address space, where the upper bits are meta-data. It is understood that this is only an example meant for purposes of illustration and is not meant to be limiting. Other bits may be used. This limits every single job to a maximum of approximately 4 ExaBytes (EB) of data for direct access with load/store/atomic operations. One example for how this data might be encoded at the full level is shown in FIG. 2.

The meta-data fields (all fields not including the address fields in FIG. 2) encode information such as user identification and/or access control list (ACL) properties, media type, access interleaving granularity, security rules, encryption requirements and isolation by job key, etc. With secondlevel re-translation of the extended address space, this extended address may be self-local due to properties such as inter-leaving or resiliency attributes expressed in the access pattern. Metadata fields can be selected as required by the applications. For example, interleaving bits can be removed if it is data is not interleaved. Flexibility to include metadata fields help in reducing packet size and hence system performance.

Descriptions of each of the proposed metadata examples are as follows:
Ruleset represents security levels or rules for concurrent accesses to common data. This may be data shared between user jobs, debuggers, or profilers.

Global Job ID represents an operating system's generated ID associated with the job making the request. This is unique and shared amongst resources dedicated to the job. This job ID becomes an "index" to a transparent global key table for auto-encryption. When implemented in the system, data yet to be encrypted will only exist in the core tile (and be observed as plain text). When in the core tile only resources assigned with the same job ID can understand the content. Once the data leaves the core tile (and passes through the VEGAS encryption block) it will only be seen as ciphertext.

The partition ID is the representation of the nature of potentially compound memory types being used to represent a region of memory - NVM, scratchpad, DRAM, etc.

Interleaving represents granularity of access which can be made dynamic based on memory type. For example, NVM can be interleaved at higher granularity as compared to scratchpads sitting closer to compute units.

The decryption key index or decryption key can also be embedded as part of metadata as ciphertext.

It is understood that the above descriptions are for purposes of illustration and are not meant to be limiting.

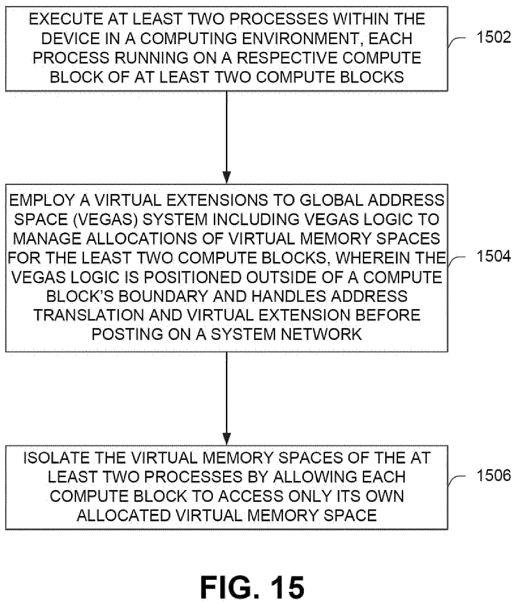

FIG. 15 illustrates a flow diagram for an illustrative VEGAS system, in accordance with one or more example embodiments of the present disclosure.

In one or more embodiments, the computing system in question incorporates a VEGAS system that facilitates process isolation between at least two processes running on their respective compute blocks. This process isolation ensures that each job has access only to resources specifically allocated to it, providing a secure computing environment.

At block 1502, a device may execute at least two processes within the device in a computing environment, each process running on a respective compute block of at least two compute blocks

At block 1504, the device may employ a Virtual Extensions to Global Address Space (VEGAS) system including VEGAS logic to manage allocations of virtual memory spaces for the least two compute blocks, wherein the VEGAS logic is positioned outside of a compute block's boundary and handles address translation and virtual extension before posting on a system network.

At block 1506, the device may isolate the virtual memory spaces of the at least two processes by allowing each compute block to access only its own allocated virtual memory space.

In addition to process isolation, the computing system includes computer-executable instructions that generate metadata for each process. This metadata is attached to a virtual address space and remains invisible to the compute blocks. Furthermore, the processing circuitry is configured to protect the system network from side-channel attacks by ensuring that each compute block remains unaware of the physical memory information.

The VEGAS system also manages a Global Address Space (GAS), which consists of several address bits. Each job in the computing environment is exposed to the first address bits for all data belonging to that job. Other address bits within the GAS encode an extended address space that includes metadata fields such as user identification, access control list properties, media type, access interleaving granularity, security rules, and encryption requirements.

The VEGAS system comprises components for performing various tasks, including virtual address translation, job isolation, metadata field management, data encryption and decryption, and access rule checks and security management. Additionally, the processing circuitry is configured to allow flexible selection of metadata fields to help reduce packet size and improve overall system performance.

It is understood that the above descriptions are for purposes of illustration and are not meant to be limiting.

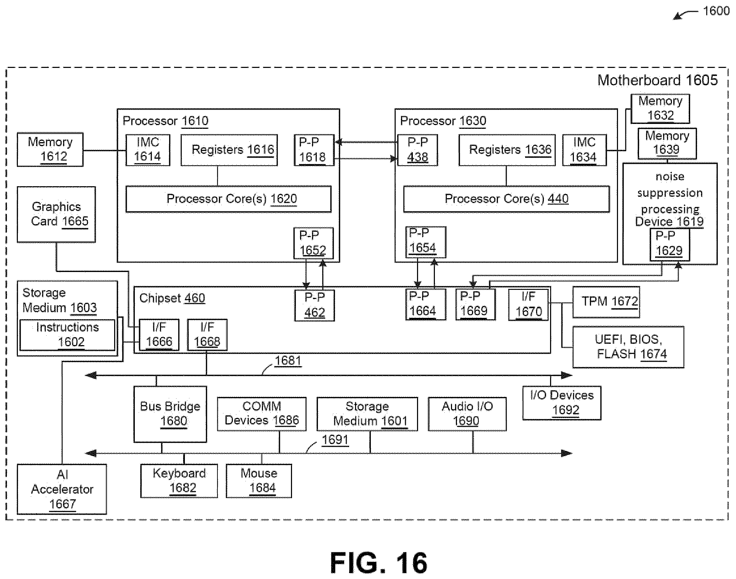

FIG. 16 illustrates an embodiment of an exemplary system 1600, in accordance with one or more example embodiments of the present disclosure.

In various embodiments, the computing system 1600 may comprise or be implemented as part of an electronic device. The embodiments are not limited in this context. More generally, the computing system 1600 is configured to implement all logic, systems, processes, logic flows, methods, equations, apparatuses, and functionality described herein.

The system 1600 may be a computer system with multiple processor cores such as a distributed computing system, supercomputer, high-performance computing system, computing cluster, mainframe computer, mini-computer, client-server system, personal computer (PC), workstation, server, portable computer, laptop computer, tablet computer, a handheld device such as a personal digital assistant (PDA), or other devices for processing, displaying, or transmitting information. Similar embodiments may comprise, e.g., entertainment devices such as a portable music player or a portable video player, a smart phone or other cellular phones, a telephone, a digital video camera, a digital still camera, an external storage device, or the like. Further embodiments implement larger scale server configurations. In other embodiments, the system 1600 may have a single processor with one core or more than one processor. Note that the term "processor" refers to a processor with a single core or a processor package with multiple processor cores.

The computing system 1600 is configured to implement all logic, systems, processes, logic flows, methods, apparatuses, and functionality described herein with reference to the above figures.

As used in this application, the terms "system" and "component" and "module" are intended to refer to a computer-related entity, either hardware, a combination of hardware and software, software, or software in execution, examples of which are provided by the exemplary system 1600. For example, a component can be, but is not limited to being, a process running on a processor, a processor, a hard disk drive, multiple storage drives (of optical and/or magnetic storage medium), an object, an executable, a thread of execution, a program, and/or a computer.

By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the uni-directional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

As shown in this figure, system 1600 comprises a motherboard 1605 for mounting platform components. The motherboard 1605 is a point-to-point interconnect platform that includes a processor 1610, a processor 1630 coupled via a point-to-point interconnects as an Ultra Path Interconnect (UPI), and a VEGAS device 1619. In other embodiments, the system 1600 may be of another bus architecture, such as a multi-drop bus. Furthermore, each of processors 1610 and 1630 may be processor packages with multiple processor cores. As an example, processors 1610 and 1630 are shown to include processor core(s) 1620 and 1640, respectively. While the system 1600 is an example of a two-socket (2S) platform, other embodiments may include more than two sockets or one socket. For example, some embodiments may include a four-socket (4S) platform or an eight-socket (8S) platform. Each socket is a mount for a processor and may have a socket identifier. Note that the term platform refers to the motherboard with certain components mounted such as the processors 1610 and the chipset 1660. Some platforms may include additional components and some platforms may only include sockets to mount the processors and/or the chipset.

The processors 1610 and 1630 can be any of various commercially available processors, including without limitation an Intel^{®} Celeron^{®}, Core^{®}, Core (2) Duo^{®}, Itanium^{®}, Pentium^{®}, Xeon^{®}, and XScale^{®} processors; AMD^{®} Athlon^{®}, Duron^{®} and Opteron^{®} processors; ARM^{®} application, embedded and secure processors; IBM^{®} and Motorola^{®} DragonBall^{®} and PowerPC^{®} processors; IBM and Sony^{®} Cell processors; and similar processors. Dual microprocessors, multi-core processors, and other multi-processor architectures may also be employed as the processors 1610, and 1630.

The processor 1610 includes an integrated memory controller (IMC) 1614, registers 1616, and point-to-point (P-P) interfaces 1618 and 1652. Similarly, the processor 1630 includes an IMC 1634, registers 1636, and P-P interfaces 1638 and 1654. The IMC's 1614 and 1634 couple the processors 1610 and 1630, respectively, to respective memories, a memory 1612 and a memory 1632. The memories 1612 and 1632 may be portions of the main memory (e.g., a dynamic random-access memory (DRAM)) for the platform such as double data rate type 3 (DDR3) or type 4 (DDR4) synchronous DRAM (SDRAM). In the present embodiment, the memories 1612 and 1632 locally attach to the respective processors 1610 and 1630.

In addition to the processors 1610 and 1630, the system 1600 may include a VEGAS device 1619. The VEGAS device 1619 may be connected to chipset 1660 by means of P-P interfaces 1629 and 1669. The VEGAS device 1619 may also be connected to a memory 1639. In some embodiments, the VEGAS device 1619 may be connected to at least one of the processors 1610 and 1630. In other embodiments, the memories 1612, 1632, and 1639 may couple with the processor 1610 and 1630, and the VEGAS device 1619 via a bus and shared memory hub.

System 1600 includes chipset 1660 coupled to processors 1610 and 1630. Furthermore, chipset 1660 can be coupled to storage medium 1603, for example, via an interface (I/F) 1666. The I/F 1666 may be, for example, a Peripheral Component Interconnect- enhanced (PCI-e). The processors 1610, 1630, and the VEGAS device 1619 may access the storage medium 1603 through chipset 1660.

Storage medium 1603 may comprise any non-transitory computer-readable storage medium or machine- readable storage medium, such as an optical, magnetic or semiconductor storage medium. In various embodiments, storage medium 1603 may comprise an article of manufacture. In some embodiments, storage medium 1603 may store computer-executable instructions, such as computer-executable instructions 1602 to implement one or more of processes or operations described herein, (e.g., FIG. 15). The storage medium 1603 may store computer-executable instructions for any equations depicted above. The storage medium 1603 may further store computer-executable instructions for models and/or networks described herein, such as a neural network or the like. Examples of a computer-readable storage medium or machine-readable storage medium may include any tangible media capable of storing electronic data, including volatile memory or non-volatile memory, removable or non-removable memory, erasable or non-erasable memory, writeable or rewriteable memory, and so forth. Examples of computer-executable instructions may include any suitable types of code, such as source code, compiled code, interpreted code, executable code, static code, dynamic code, object-oriented code, visual code, and the like. It should be understood that the embodiments are not limited in this context.

The processor 1610 couples to a chipset 1660 via P-P interfaces 1652 and 1662 and the processor 1630 couples to a chipset 1660 via P-P interfaces 1654 and 1664. Direct Media Interfaces (DMIs) may couple the P-P interfaces 1652 and 1662 and the P-P interfaces 1654 and 1664, respectively. The DMI may be a high-speed interconnect that facilitates, e.g., eight Giga Transfers per second (GT/s) such as DMI 3.0. In other embodiments, the processors 1610 and 1630 may interconnect via a bus.

The chipset 1660 may comprise a controller hub such as a platform controller hub (PCH). The chipset 1660 may include a system clock to perform clocking functions and include interfaces for an I/O bus such as a universal serial bus (USB), peripheral component interconnects (PCIs), serial peripheral interconnects (SPIs), integrated interconnects (I2Cs), and the like, to facilitate connection of peripheral devices on the platform. In other embodiments, the chipset 1660 may comprise more than one controller hub such as a chipset with a memory controller hub, a graphics controller hub, and an input/output (I/O) controller hub.

In the present embodiment, the chipset 1660 couples with a trusted platform module (TPM) 1672 and the UEFI, BIOS, Flash component 1674 via an interface (I/F) 1670. The TPM 1672 is a dedicated microcontroller designed to secure hardware by integrating cryptographic keys into devices. The UEFI, BIOS, Flash component 1674 may provide pre-boot code.

Furthermore, chipset 1660 includes the I/F 1666 to couple chipset 1660 with a high-performance graphics engine, graphics card 1665. In other embodiments, the system 1600 may include a flexible display interface (FDI) between the processors 1610 and 1630 and the chipset 1660. The FDI interconnects a graphics processor core in a processor with the chipset 1660.

Various I/O devices 1692 couple to the bus 1681, along with a bus bridge 1680 which couples the bus 1681 to a second bus 1691 and an I/F 1668 that connects the bus 1681 with the chipset 1660. In one embodiment, the second bus 1691 may be a low pin count (LPC) bus. Various devices may couple to the second bus 1691 including, for example, a keyboard 1682, a mouse 1684, communication devices 1686, a storage medium 1601, and an audio I/O 1690.

The artificial intelligence (AI) accelerator 1667 may be circuitry arranged to perform computations related to AI. The AI accelerator 1667 may be connected to storage medium 1603 and chipset 1660. The AI accelerator 1667 may deliver the processing power and energy efficiency needed to enable abundant-data computing. The AI accelerator 1667 is a class of specialized hardware accelerators or computer systems designed to accelerate artificial intelligence and machine learning applications, including artificial neural networks and machine vision. The AI accelerator 1667 may be applicable to algorithms for robotics, internet of things, other data-intensive and/or sensor-driven tasks.

Many of the I/O devices 1692, communication devices 1686, and the storage medium 1601 may reside on the motherboard 1605 while the keyboard 1682 and the mouse 1684 may be add-on peripherals. In other embodiments, some or all the I/O devices 1692, communication devices 1686, and the storage medium 1601 are add-on peripherals and do not reside on the motherboard 1605.

Some examples may be described using the expression "in one example" or "an example" along with their derivatives. These terms mean that a particular feature, structure, or characteristic described in connection with the example is included in at least one example. The appearances of the phrase "in one example" in various places in the specification are not necessarily all referring to the same example.

Some examples may be described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, yet still co-operate or interact with each other.

### APPARATUS AND METHOD FOR PER-USER SECURE ACCESS CONTROL WITH FINE GRANULARITY

Large scale datasets - up to multi-petabytes in size - are often required to stay resident in memory both for high-availability and practicality purposes. Such datasets must be made available to a multitude of potentially concurrent users, while enforcing that these users may only be allowed to access or modify a specific subset of the whole dataset to enforce clearance aspects or privacy concerns.

In current implementations, per-user access is controlled through software abstractions that define a formalism to represent data and APIs to access and manipulate that data. The software is then responsible for enforcing permissions to access data. Although these approaches work, they are inherently vulnerable to software bugs and security exploits abusing the permission checks mechanisms.

Embodiments of the invention include a fine-grained access control list (ACL) definition and enforcement of memory accesses on a per-user basis supported by hardware extensions. Some embodiments rely on a data structure including a per-job security index linked to a user data block (e.g., a data word, a data byte, etc) which points to an array with a number of user fields, where each field indicates per-user security control values.

As used herein, a "resource" refers to any accessible compute or memory in a system. A "job" refers to a process or other program code entity identified by a unique Job ID, which may be associated with a collection of reserved resources. A "user" refers to any entity with an account on the system and can access job resources. A "dataset" refers to data that resides in memory or storage and which may be shared with multiple users with different access permissions.

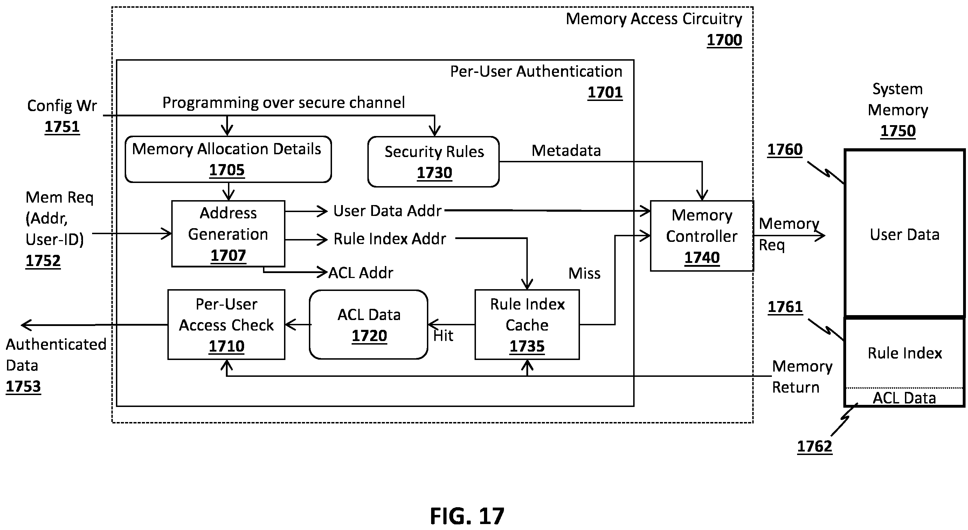

FIG. 17 illustrates one embodiment of per-user authentication circuitry/logic 1701 which may be implemented in hardware (e.g., integrated in a memory controller 1740 or integrated within memory access circuitry and directly coupled to the memory controller 1740), or via a combination of hardware and software (e.g., firmware executed by a dedicated microcontroller or processor).

The memory access circuitry 1700 in FIG. 17 may be coupled to other system components and may operate, at least in part, as described above with respect to the memory access circuitry 364 and/or the memory unit 370 in FIG. 3B. Additionally, a plurality of cores such as the core illustrated in FIG. 3B or the cores 202A-N illustrated in FIG. 2 may execute software (e.g., "jobs" as described below) on behalf of different users. Execution of the software may trigger various memory access requests, which are then processed by the per-user authentication circuitry/logic 1701 as described in further detail below.

In one embodiment, memory allocation details 1705 and security rules 1730 are indicated in a configuration write operation 1751 which is a privileged or supervisory operation only available to system software or other trusted components. In one embodiment, only a root (a trusted source) entity is permitted to write configuration data to the per-user authentication circuitry/logic 1701, which may include a set of configuration registers (e.g., MSRs) to store the memory allocation details 1705, security rules 1730, and other security metadata and security control data.

Memory requests 1752 of these embodiments include a User-ID in combination with a memory address. Address generation circuitry 1707 generates a user data address (e.g., a physical address in system memory 1750), a rule index address, and an ACL address based on the User-ID and provided memory address. In one embodiment, access control lists (ACLs) and corresponding rule index information are stored in the system memory 1750 and cached in a rule index cache 1735 to provide efficient access to ACL data 1720 by per-user access check circuitry 1710. The system memory 1750 may be partitioned into regions for user data 1760, rule index data 1761, and ACL data 1762 as described herein. The data memory region includes the dataset to be protected at a given data granularity ranging from 1 to N bytes. The ACL region contains one corresponding entry per data granularity. The ACL granularity depends on how many rules a use-case encodes and can range from 1 to M bytes. This field is referred to as a "Security index" as described below.

In one embodiment, the rule index address provided by address generation circuitry 1707 is used to perform a lookup in the rule index cache 1735. In response to a miss in the cache, a request is sent to the memory controller 1740 to fetch this portion of the rule index and corresponding ACL data (e.g., ACL data 1720), which is then stored in the cache 1735 and provided to per-user access check circuitry 1710. The ACL data 1720 is provided directly from the rule index cache 1735 if available.

The memory controller 1740 accesses system memory 1750 based on the user data address provided from the address generation circuitry 1707 and in accordance with metadata specified by the security rules 1730 (e.g., based on user/application permissions specified in the metadata). If the metadata indicates that the memory request 1752 can be fulfilled, the data is returned to the per-user access check circuitry 1710, which validates the request with the ACL data 1720 before returning the (authenticated) data 1753 to the requestor (e.g., an application executed by the user).

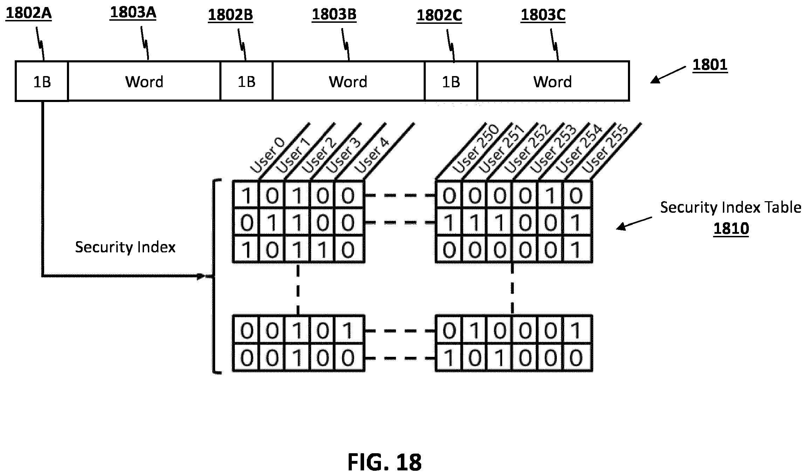

FIG. 18 illustrates one embodiment of an ACL data structure 1801 used within a framework as described herein to define an access control list and enforce a memory access permission scheme in hardware. As mentioned, the system memory 1750 may be partitioned into a user data region 1760 and an ACL region 1761 (containing the rule index and ACL data). The user data memory region 1760 contains the dataset to be protected at a given "data granularity" ranging from 1 to N bytes. The ACL region 1761 includes one corresponding entry per the data granularity. The ACL granularity depends on how many rules a use-case is required to encode and can range from 1 to M bytes.

In FIG. 18, for example, three 1-byte fields 1802A-C are shown within the ACL data structure 1801, which specify the security index to be applied in a security index table 1810. Each entry of the ACL list is a mask bit which encodes the access type for a specific rule and a user. For example, each column of the security index table 1810 shown in FIG. 18 is associated with a particular user (e.g., User-0 to User-255 in the example) and each row indicates a mask bit for a particular rule. Depending on the use-cases for which embodiments of the invention are implemented, the data and ACL granularities may be adjusted to reach acceptable trade-offs in terms of the protection afforded and subsequent space overhead.

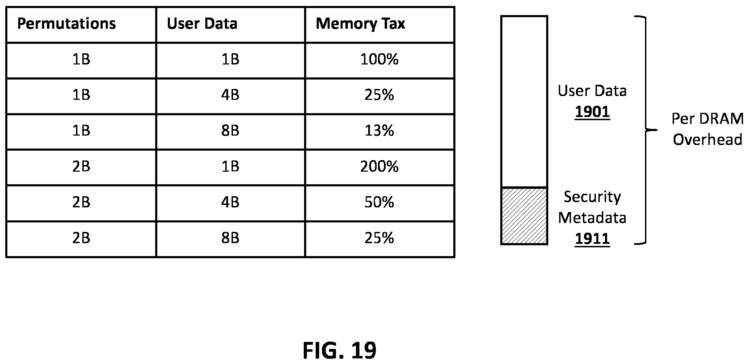

In the illustrated example, a data granularity of a word 1803A-C is used (8 bytes) in combination with the 1-byte ACL granularity. This means that memory accesses can be protected at an 8-byte granularity with 256 rules encoded (via the 1 byte ACL) to enforce. Thus, a given setup can encode 256 unique users, each user having exclusive access to their respective data. Alternatively, or additionally, 256 rules can be specified, where each rule is encoded over K-bits, providing 2^{K} combinations to be used. For example, a use-case may define 'groups' or 'colors' that have access to certain in-memory data, and a user executing code would be granted permission to access such classes of data. Memory overhead for some of the different permutations and user data access granularity is shown in FIG. 19.

Different embodiments of the invention can provision the storage of metadata across the memory region inline to the memory word, as illustrated in FIG. 18 (e.g., with ACL data bytes 1802A-C interleaved with data words 1803A-C) or as a contiguous chunk of storage within the system memory range as shown in FIG. 19 (e.g., with user data 1901 stored in a first memory range and security metadata 1911 in a second, nonoverlapping memory range).

In the embodiments described above, each ACL mask bit is associated with a specific user and a ruleset encodes per-user access control with 0-Access not allowed and 1-Access allowed. For example, the security index table 1810 shown in FIG. 18, each column of bits is associated with a particular user and each individual bit within a column indicates per-user access control for a corresponding rule. To provide more fine grained access permissions, some embodiments extend the mask encoding to a larger number of bits. For example, a 2-bit encoding may be used to provide four options: 00-Not accessible, 01-Read only, 10-Write only, 11-read write permitted. Different embodiments of the invention may use any number of access control bits to provide a larger number of access permission options. Regardless of the number, the mask bits may be arranged as an array where number of entries in that array is in equal to number of users (e.g., the columns in FIG. 18).

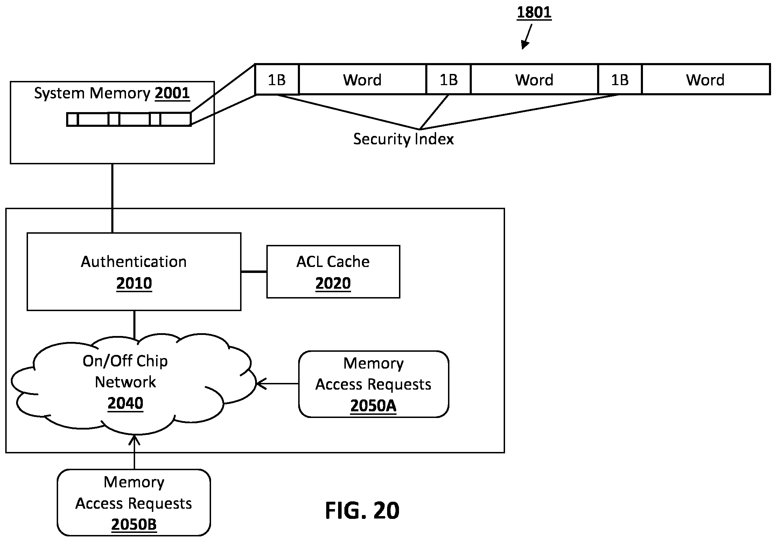

FIG. 20 illustrates an example of a per-user system security model where the system memory 2001 refers to any memory/storage devices in the system and network 2040 is an on/off-chip network which provides access to system memory 2001 via the authentication circuitry/logic 2010. In this embodiment, authentication circuitry/logic 2010 and ACL cache 2020 operate as a security block to process per-user security checks as described herein in response to local and remote memory access requests, 2050A and 2050B, respectively. As used herein, a "local" memory access request 2050A may be a request generated from an entity (e.g., a core, accelerator, etc) within the same chip or the same package as the authentication logic/circuitry and a "remote" memory access request 2050B may be a request generated externally from the chip or package (e.g., from a different socket or from a different system coupled via a network). In one embodiment, the authentication circuitry/logic 2010 isolates the memory 2001 from user access 2050A-B and performs security checks before allowing the memory access operations (e.g., read/write operations). As mentioned, the ACL cache 2020 coupled to the authentication circuitry/logic 2010 accelerates security index table access.

In some embodiments, the authentication circuitry/logic 2010 performs initial security checks in response to memory access requests 2050A-B and allows data access at a finer granularity (i.e., using the ACL data) only after the initial authentication has been performed. In these embodiments, the authentication circuitry/logic 2010 and corresponding ACL may be accessed only by a trusted source (e.g., a "root" source). Thus, access to the security index is initiated by the authentication circuitry/logic 2010 and operates transparently to users and user applications.

The Virtual Extension to Global Address Space (VEGAS) described above provides techniques to isolate the system resources on a per-process or per-job granularity. Within a given process/job, multiple users can access data resources (e.g., a database or in-memory data store), and the embodiments described with respect to FIGS. 17-20 can provide per-user secure access to the data resources at variable levels of granularity.

The fine-grained access control list (ACL) definition and enforcement of memory accesses on a per-user basis supported by hardware extensions as described herein allows dataset management software to delegate the permission and access control responsibilities to hardware. This offers an added layer of protection against leveraging software flaws and executing malicious codes to access data. These embodiments allow an authenticated entity who can access the system with the resident dataset to bypass the software layers (like query languages) by directly accessing machine memory within the job. These embodiments are also beneficial for governing access to in-memory data-structures that have simple functional APIs or those which can be directly addressed through load and store instructions. Thus, the embodiments of the invention can help improve the security of existing legacy codes, or allow programmers to develop new secured software, without requiring additional security software layers and may potentially improve the software development cycle. Additionally, these embodiments provide a data security solution where multiple users can access a shared dataset.

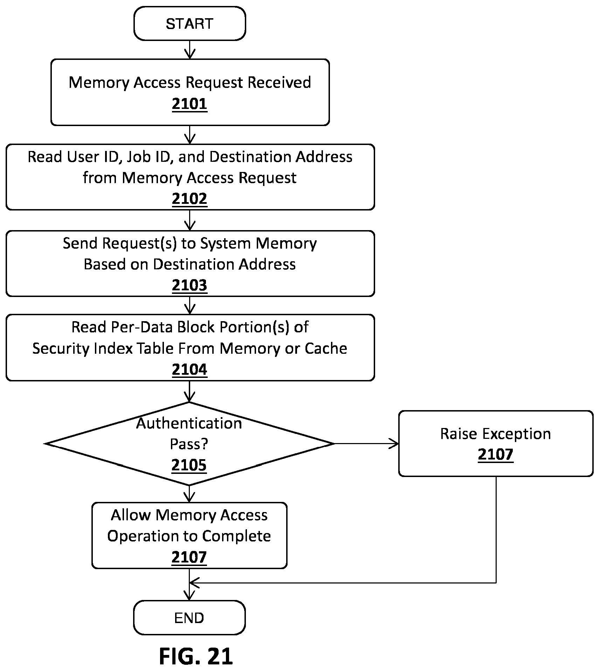

A method for performing per-user security checks in accordance with some embodiments of the invention is illustrated in Figure 21. The method may be implemented within the context of the various architectures described herein, but is not limited to any particular system or processor architecture.

At 2101, a memory access request associated with a particular user and process is received including a unique User ID to identify the user and a unique Job ID to uniquely identify the job/process. At 2102, the User ID, Job ID, and destination address in system memory are read from the memory access request.

At 2103, the memory access request is sent to the system memory based on the destination address. This may include a single request for embodiments in which the ACL metadata is stored inline with the user data (e.g., as shown in FIG. 18) or multiple requests if the ACL metadata is stored in a separate region in system memory (e.g., as shown within system memory 1750 in FIG. 17).

At 2104, the per-data block (e.g., per-data word, per-data doubleword, per-data byte, etc) portions of the security index table are fetched from memory or cache in accordance with the security metadata tagged to the memory access request (e.g., the User ID, Job ID, destination address). For example, all of the security index metadata associated with the particular user may be fetched from system memory and stored in the ACL cache.

At 2105, per-data block authentication is performed. For example, based on the User ID, Job ID, and destination address, the relevant portions of the security index table 1810 may be indexed and read to determine whether the memory access request should be validated. If it passes (i.e., if the relevant bits of the security index table indicate the memory access is permitted), then the data is sent to the memory access is allowed to complete at 2106 (e.g., the requested data is sent to the source for a read operation and data is written to memory for a write operation).If it does not pass, then an exception is raised at 2107 showing invalid access and no response (or ERROR message) is sent.

In existing implementations, Page Table Entries (PTEs) include various access protection bits/fields which are marked to indicate the access level for the corresponding memory region (e.g., read-only, read-write, no execute, etc, for each memory page). Some embodiments of the invention store security metadata in one or more of these PTE fields to reduce the memory tax described above with respect to FIG. 19. IN some embodiments, additional fields are included in PTEs to store portions of the security metadata 1911.

As mentioned, in some embodiments, only a root source (a trusted source) can read and write the Access Control List and/or other configuration data to the configuration registers and the security index of the per-user authentication circuitry/logic 1701 and has visibility to metadata. Embodiments of the invention provision a mode-switch to selectively enable or disable per-user and/or per-word security control. This mode switch may be specified to turn on or turn off some or all of the per-user authentication techniques described herein.

Some embodiments of the invention implement an optimization which does not rely on a fixed ratio of security meta-data bytes per application payload bytes. Instead, these embodiments use a more flexible scheme, such as encoding the ratio in the Page Tables for automatic handling at a larger granularity. The ability to identify large portions of the code and data as generally accessible or only accessible by a trusted source is one optimization that can vastly reduce any potential overhead of the proposed scheme.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the Figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.). In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware. Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention.

## Claims

1. A processor (115, 170, 180, 200, 1610, 1630), comprising:
a plurality of cores (202A-N) configured to execute instructions associated with a plurality of jobs to generate memory access requests (2050A, 2050B) on behalf of a plurality of users;
memory access circuitry (364, 1700) configured to couple at least one core of the plurality of cores (202A-N) to a memory (132, 134, 1612, 1632, 1639, 1750, 2001), the memory access circuitry (364, 1700) comprising:
per-user authentication circuitry operable to perform an access check for a request (2050A, 2050B) to access a data block in the memory (132, 134, 1612, 1632, 1639, 1750, 2001) at a sub-page granularity, the request (2050A, 2050B) comprising a security index associated with the data block;
the per-user authentication circuitry configured to use the security index to identify corresponding bits within an access control data structure to determine whether to provide access to the data block in response to the request (2050A, 2050B).

2. The processor (115, 170, 180, 200, 1610, 1630) of claim 1 wherein the security index includes or is based on a combination of a user-ID code uniquely identifying a user of the plurality of users associated with the request (2050A, 2050B) and a job-ID code uniquely identifying a job of the plurality of jobs.

3. The processor (115, 170, 180, 200, 1610, 1630) of claim 1 or 2 wherein the memory access circuitry (364, 1700) further comprises:
address generation circuitry configured to generate a user data address and an index address based on the request (2050A, 2050B), the user data address to identify a location of the data block in the memory (132, 134, 1612, 1632, 1639, 1750, 2001) and the index address to identify a corresponding portion of the access control data structure based on the security index.

4. The processor (115, 170, 180, 200, 1610, 1630) of claim 3 further comprising:
an index cache (1735) configured to store the corresponding portion of the access control data structure in accordance with a caching policy.

5. The processor (115, 170, 180, 200, 1610, 1630) of any of claims 1 to 4 wherein the data block comprises a granularity of at least one of: a byte, a word (1803A-C), a doubleword, or a quadword.

6. The processor (115, 170, 180, 200, 1610, 1630) of claim 5 wherein the data block comprises one of a plurality of data blocks stored in the memory (132, 134, 1612, 1632, 1639, 1750, 2001), wherein the plurality of data blocks are to be associated with a corresponding plurality of security index values.

7. The processor (115, 170, 180, 200, 1610, 1630) of claim 6 wherein the plurality of security index values are to be stored in a first region of the memory (132, 134, 1612, 1632, 1639, 1750, 2001) separate from a second region of memory (132, 134, 1612, 1632, 1639, 1750, 2001) in which the plurality of data blocks are stored.

8. The processor (115, 170, 180, 200, 1610, 1630) of claim 6 wherein each security index value of the plurality of security index values is to be stored in a region of the memory (132, 134, 1612, 1632, 1639, 1750, 2001) in which the data blocks are stored.

9. The processor (115, 170, 180, 200, 1610, 1630) of any of claims 1 to 8 wherein the access control data structure comprises an access control table comprising a plurality of entries, each entry to store a plurality of access control bits associated with a user of the plurality of users.

10. The processor (115, 170, 180, 200, 1610, 1630) of claim 9 wherein the per-user authentication circuitry is configured to read the plurality of access control bits associated with a first user of the plurality of users associated with the request (2050A, 2050B) for the data block to determine whether to provide the first user with access to the data block.

11. A method, comprising:
executing a plurality of jobs on behalf of a plurality of users;
receiving a request (2050A, 2050B) to access a data block in a memory (132, 134, 1612, 1632, 1639, 1750, 2001) at a sub-page granularity, the request (2050A, 2050B) associated with a job of the plurality of jobs and including a security index;
fetching a portion of an access control data structure from the memory (132, 134, 1612, 1632, 1639, 1750, 2001) based on the security index; and
identifying corresponding bits within the portion of the access control data structure to determine whether to provide access to the data block in response to the request (2050A, 2050B).

12. The method of claim 11 wherein the security index includes or is based on a combination of a user-ID code uniquely identifying a user of the plurality of users associated with the request (2050A, 2050B) and a job-ID code uniquely identifying a job of the plurality of jobs.

13. The method of claim 11 or 12 wherein the memory access circuitry (364, 1700) further comprises:
address generation circuitry to generate a user data address and an index address based on the request (2050A, 2050B), the user data address to identify a location of the data block in the memory (132, 134, 1612, 1632, 1639, 1750, 2001) and the index address to identify a corresponding portion of the access control data structure based on the security index.

14. The method of claim 13 further comprising:
caching the corresponding portion of the access control data structure in a cache (334, 374, 2020) in accordance with a caching policy.

15. The method of any of claims 11 to 14 wherein the data block comprises a granularity of at least one of: a byte, a word (1803A-C), a doubleword, or a quadword.

## Patentansprüche

1. Prozessor (115, 170, 180, 200, 1610, 1630), umfassend:
eine Mehrzahl von Kernen (202A-N), die ausgelegt sind, Anweisungen auszuführen, die einer Mehrzahl von Aufträgen zugeordnet sind, um Speicherzugriffsanforderungen (2050A, 2050B) im Namen einer Mehrzahl von Benutzern zu erzeugen;
Speicherzugriffsschaltungsanordnung (364, 1700), die ausgelegt ist, mindestens einen Kern der Mehrzahl von Kernen (202A-N) mit einem Speicher (132, 134, 1612, 1632, 1639, 1750, 2001) zu koppeln, wobei die Speicherzugriffsschaltunganordnung (364, 1700) umfasst:
eine benutzerspezifische Authentifizierungsschaltungsanordnung, die betreibbar ist, eine Zugriffsprüfung für eine Anforderung (2050A, 2050B) zum Zugreifen auf einen Datenblock in dem Speicher (132, 134, 1612, 1632, 1639, 1750, 2001) mit einer Granularität unterhalb der Seitengranularität durchzuführen, wobei die Anforderung (2050A, 2050B) einen Sicherheitsindex umfasst, der dem Datenblock zugeordnet ist;
wobei die benutzerspezifische Authentifizierungsschaltungsanordnung ausgelegt ist, den Sicherheitsindex zu verwenden, um entsprechende Bits innerhalb einer Zugriffskontrolldatenstruktur zu identifizieren, um zu bestimmen, ob als Reaktion auf die Anforderung (2050A, 2050B) Zugriff auf den Datenblock gewährt wird.

2. Prozessor (115, 170, 180, 200, 1610, 1630) nach Anspruch 1, wobei der Sicherheitsindex eine Kombination aus einem Benutzer-ID-Code, der einen Benutzer der Mehrzahl von Benutzern, die der Anforderung (2050A, 2050B) zugeordnet sind, eindeutig identifiziert, und einem Auftrags-ID-Code, der einen Auftrag der Mehrzahl von Aufträgen eindeutig identifiziert, enthält oder auf einer solchen Kombination basiert.

3. Prozessor (115, 170, 180, 200, 1610, 1630) nach Anspruch 1 oder 2, wobei die Speicherzugriffsschaltungsanordnung (364, 1700) ferner umfasst:
eine Adressgenerierungsschaltungsanordnung, die ausgelegt ist, auf der Grundlage der Anforderung (2050A, 2050B) eine Benutzerdatenadresse und eine Indexadresse zu erzeugen, wobei die Benutzerdatenadresse dazu dient, einen Ort des Datenblocks in dem Speicher (132, 134, 1612, 1632, 1639, 1750, 2001) zu identifizieren, und die Indexadresse dazu dient, auf der Grundlage des Sicherheitsindex einen entsprechenden Abschnitt der Zugriffskontrolldatenstruktur zu identifizieren.

4. Prozessor (115, 170, 180, 200, 1610, 1630) nach Anspruch 3, ferner umfassend:
einen Index-Cache (1735), der ausgelegt ist, den entsprechenden Abschnitt der Zugriffskontrolldatenstruktur gemäß einer Zwischenspeicherrichtlinie zu speichern.

5. Prozessor (115, 170, 180, 200, 1610, 1630) nach einem der Ansprüche 1 bis 4, wobei der Datenblock eine Granularität von mindestens einem von Folgendem umfasst: einem Byte, einem Wort (1803A-C), einem Doppelwort oder einem Quadwort.

6. Prozessor (115, 170, 180, 200, 1610, 1630) nach Anspruch 5, wobei der Datenblock einen von einer Mehrzahl von Datenblöcken umfasst, die in dem Speicher (132, 134, 1612, 1632, 1639, 1750, 2001) gespeichert sind, wobei die Mehrzahl von Datenblöcken einer entsprechenden Mehrzahl von Sicherheitsindexwerten zugeordnet werden soll.

7. Prozessor (115, 170, 180, 200, 1610, 1630) nach Anspruch 6, wobei die Mehrzahl von Sicherheitsindexwerten in einem ersten Bereich des Speichers (132, 134, 1612, 1632, 1639, 1750, 2001) gespeichert werden soll, der von einem zweiten Bereich des Speichers (132, 134, 1612, 1632, 1639, 1750, 2001) getrennt ist, in dem die Mehrzahl von Datenblöcken gespeichert ist.

8. Prozessor (115, 170, 180, 200, 1610, 1630) nach Anspruch 6, wobei jeder Sicherheitsindexwert der Mehrzahl von Sicherheitsindexwerten in einem Bereich des Speichers (132, 134, 1612, 1632, 1639, 1750, 2001) gespeichert werden soll, in dem die Datenblöcke gespeichert sind.

9. Prozessor (115, 170, 180, 200, 1610, 1630) nach einem der Ansprüche 1 bis 8, wobei die Zugriffskontrolldatenstruktur eine Zugriffskontrolltabelle umfasst, die eine Mehrzahl von Einträgen umfasst, wobei jeder Eintrag eine Mehrzahl von Zugriffskontrollbits speichern soll, die einem Benutzer der Mehrzahl von Benutzern zugeordnet sind.

10. Prozessor (115, 170, 180, 200, 1610, 1630) nach Anspruch 9, wobei die benutzerspezifische Authentifizierungsschaltungsanordnung ausgelegt ist, die Mehrzahl von Zugriffskontrollbits zu lesen, die einem ersten Benutzer der Mehrzahl von Benutzern zugeordnet sind, die der Anforderung (2050A, 2050B) für den Datenblock zugeordnet sind, um zu bestimmen, ob dem ersten Benutzer Zugriff auf den Datenblock gewährt wird.

11. Verfahren, umfassend:
Ausführen einer Mehrzahl von Aufträgen im Namen einer Mehrzahl von Benutzern;
Empfangen einer Anforderung (2050A, 2050B) zum Zugreifen auf einen Datenblock in einem Speicher (132, 134, 1612, 1632, 1639, 1750, 2001) mit einer Granularität unterhalb der Seitengranularität, wobei die Anforderung (2050A, 2050B) einem Auftrag der Mehrzahl von Aufträgen zugeordnet ist und einen Sicherheitsindex umfasst;
Abrufen eines Abschnitts einer Zugriffskontrolldatenstruktur aus dem Speicher (132, 134, 1612, 1632, 1639, 1750, 2001) auf der Grundlage des Sicherheitsindex; und
Identifizieren entsprechender Bits innerhalb des Abschnitts der Zugriffskontrolldatenstruktur, um zu bestimmen, ob als Reaktion auf die Anforderung (2050A, 2050B) Zugriff auf den Datenblock gewährt wird.

12. Verfahren nach Anspruch 11, wobei der Sicherheitsindex eine Kombination aus einem Benutzer-ID-Code, der einen Benutzer der Mehrzahl von Benutzern, die der Anforderung (2050A, 2050B) zugeordnet sind, eindeutig identifiziert, und einem Auftrags-ID-Code, der einen Auftrag der Mehrzahl von Aufträgen eindeutig identifiziert, enthält oder auf einer solchen Kombination basiert.

13. Verfahren nach Anspruch 11 oder 12, wobei die Speicherzugriffsschaltungsanordnung (364, 1700) ferner umfasst:
Adressgenerierungsschaltungsanordnung zum Erzeugen einer Benutzerdatenadresse und einer Indexadresse auf der Grundlage der Anforderung (2050A, 2050B), wobei die Benutzerdatenadresse dazu dient, einen Ort des Datenblocks in dem Speicher (132, 134, 1612, 1632, 1639, 1750, 2001) zu identifizieren, und die Indexadresse dazu dient, auf der Grundlage des Sicherheitsindex einen entsprechenden Abschnitt der Zugriffskontrolldatenstruktur zu identifizieren.

14. Verfahren nach Anspruch 13, ferner umfassend:
Zwischenspeichern des entsprechenden Abschnitts der Zugriffskontrolldatenstruktur in einem Cache (334, 374, 2020) gemäß einer Zwischenspeicherrichtlinie.

15. Verfahren nach einem der Ansprüche 11 bis 14, wobei der Datenblock eine Granularität von mindestens einem von Folgendem umfasst: einem Byte, einem Wort (1803A-C), einem Doppelwort oder einem Quadwort.

## Revendications

1. Processeur (115, 170, 180, 200, 1610, 1630) comprenant :
une pluralité de cœurs (202A-N) configurés pour exécuter des instructions associées à une pluralité de tâches pour générer des demandes (2050A, 2050B) d'accès en mémoire pour le compte d'une pluralité d'utilisateurs ;
une circuiterie (364, 1700) d'accès à la mémoire configurée pour coupler au moins un cœur de la pluralité de cœurs (202A-N) à une mémoire (132, 134, 1612, 1632, 1639, 1750, 2001), la circuiterie (364, 1700) d'accès à la mémoire comprenant :
une circuiterie d'authentification par utilisateur utilisable pour effectuer une vérification d'accès pour une demande (2050A, 2050B) d'accès à un bloc de données dans la mémoire (132, 134, 1612, 1632, 1639, 1750, 2001) à une granularité inférieure à une page, la demande (2050A, 2050B) comprenant un indice de sécurité associé au bloc de données ;
la circuiterie d'authentification par utilisateur étant configurée pour utiliser l'indice de sécurité pour identifier des bits correspondants dans une structure de données de contrôle d'accès afin de déterminer s'il faut fournir un accès au bloc de données en réponse à la demande (2050A, 2050B).

2. Processeur (115, 170, 180, 200, 1610, 1630) selon la revendication 1, l'indice de sécurité comprenant ou étant basé sur une combinaison d'un code d'identification d'utilisateur identifiant de manière unique un utilisateur de la pluralité d'utilisateurs associés à la demande (2050A, 2050B) et d'un code d'identification de tâche identifiant de manière unique une tâche de la pluralité de tâches.

3. Processeur (115, 170, 180, 200, 1610, 1630) selon la revendication 1 ou 2, la circuiterie (364, 1700) d'accès à la mémoire comprenant en outre :
une circuiterie de génération d'adresse configurée pour générer une adresse de données d'utilisateur et une adresse d'indice sur la base de la demande (2050A, 2050B), l'adresse de données d'utilisateur servant à identifier un emplacement du bloc de données dans la mémoire (132, 134, 1612, 1632, 1639, 1750, 2001) et l'adresse d'indice servant à identifier une partie correspondante de la structure de données de contrôle d'accès sur la base de l'indice de sécurité.

4. Processeur (115, 170, 180, 200, 1610, 1630) selon la revendication 3, comprenant en outre :
une antémémoire (1735) d'indice configurée pour stocker la partie correspondante de la structure de données de contrôle d'accès conformément à une politique de mise en antémémoire.

5. Processeur (115, 170, 180, 200, 1610, 1630) selon l'une quelconque des revendications 1 à 4, le bloc de données comprenant une granularité d'au moins l'un des éléments suivants : un octet, un mot (1803A-C), un mot double ou un mot quadruple.

6. Processeur (115, 170, 180, 200, 1610, 1630) selon la revendication 5, dans lequel le bloc de données comprend un bloc parmi une pluralité de blocs de données stockés dans la mémoire (132, 134, 1612, 1632, 1639, 1750, 2001), la pluralité de blocs de données devant être associée à une pluralité correspondante de valeurs d'indice de sécurité.

7. Processeur (115, 170, 180, 200, 1610, 1630) selon la revendication 6, la pluralité de valeurs d'indice de sécurité devant être stockée dans une première région de la mémoire (132, 134, 1612, 1632, 1639, 1750, 2001) distincte d'une deuxième région de la mémoire (132, 134, 1612, 1632, 1639, 1750, 2001) dans laquelle est stockée la pluralité de blocs de données.

8. Processeur (115, 170, 180, 200, 1610, 1630) selon la revendication 6, chaque valeur d'indice de sécurité de la pluralité de valeurs d'indice de sécurité devant être stockée dans une région de la mémoire (132, 134, 1612, 1632, 1639, 1750, 2001) dans laquelle sont stockés les blocs de données.

9. Processeur (115, 170, 180, 200, 1610, 1630) selon l'une quelconque des revendications 1 à 8, la structure de données de contrôle d'accès comprenant une table de contrôle d'accès comprenant une pluralité d'entrées, chaque entrée servant à stocker une pluralité de bits de contrôle d'accès associés à un utilisateur de la pluralité d'utilisateurs.

10. Processeur (115, 170, 180, 200, 1610, 1630) selon la revendication 9, la circuiterie d'authentification par utilisateur étant configurée pour lire la pluralité de bits de contrôle d'accès associés à un premier utilisateur de la pluralité d'utilisateurs associés à la demande (2050A, 2050B) pour le bloc de données afin de déterminer s'il faut fournir au premier utilisateur un accès au bloc de données.

11. Procédé, comprenant :
l'exécution d'une pluralité de tâches pour le compte d'une pluralité d'utilisateurs ;
la réception d'une demande (2050A, 2050B) d'accès à un bloc de données dans une mémoire (132, 134, 1612, 1632, 1639, 1750, 2001) à une granularité inférieure à une page, la demande (2050A, 2050B) étant associée à une tâche de la pluralité de tâches et incluant un indice de sécurité ;
l'extraction d'une partie d'une structure de donnée de contrôle d'accès à partir de la mémoire (132, 134, 1612, 1632, 1639, 1750, 2001) sur la base de l'indice de sécurité ; et
l'identification de bits correspondants dans la partie de la structure de données de contrôle d'accès afin de déterminer s'il faut fournir un accès au bloc de données en réponse à la demande (2050A, 2050B).

12. Procédé selon la revendication 11, l'indice de sécurité comprenant ou étant basé sur une combinaison d'un code d'identification d'utilisateur identifiant de manière unique un utilisateur de la pluralité d'utilisateurs associés à la demande (2050A, 2050B) et d'un code d'identification de tâche identifiant de manière unique une tâche de la pluralité de tâches.

13. Procédé selon la revendication 11 ou 12, la circuiterie (364, 1700) d'accès à la mémoire comprenant en outre :
une circuiterie de génération d'adresse pour générer une adresse de données d'utilisateur et une adresse d'indice sur la base de la demande (2050A, 2050B), l'adresse de données d'utilisateur servant à identifier un emplacement du bloc de données dans la mémoire (132, 134, 1612, 1632, 1639, 1750, 2001) et l'adresse d'indice servant à identifier une partie correspondante de la structure de données de contrôle d'accès sur la base de l'indice de sécurité.

14. Procédé selon la revendication 13, comprenant en outre :
la mise en antémémoire de la partie correspondante de la structure de données de contrôle d'accès dans une antémémoire (334, 374, 2020) conformément à une politique de mise en antémémoire.

15. Procédé selon l'une quelconque des revendications 11 à 14, le bloc de données comprenant une granularité d'au moins l'un des éléments suivants : un octet, un mot (1803A-C), un double mot ou un mot quadruple.
